# EUROPÄISCHE PATENTANMELDUNG

(11) **EP 4 802 962 A2**
(43) Veröffentlichungstag der Anmeldung: **09.09.2026**
(21) Anmeldenummer: 26190738.0
(22) Anmeldetag: 26.07.2021
(51) Int. Cl.: A47F 10/02

(54) **VERFAHREN ZUR BESTIMMUNG EINER ABMESSUNG EINES PRODUKTS IN EINER PRODUKTPRÄSENTATIONSVORRICHTUNG**

(62) Dokumentnummer(n) der früheren Anmeldung(en) nach Art. 76 EPÜ: 21749588.6 / 4 377 234
(71) Anmelder: VusionGroup Deutschland GmbH, 77955 Ettenheim (DE)
(72) Erfinder: SCHWARZ, Thomas, 77749 Hohberg (DE); UNMÜSSIG, Michael, 77955 Ettenheim (DE)
(74) Vertreter: Schneider, Michael

(57) **Zusammenfassung**

Verfahren zur Bestimmung einer Abmessung eines in einer Produktpräsentationsvorrichtung (1) platzierten Produkts (10), wobei das Verfahren die folgenden Schritte aufweist, nämlich:
- automatisches Feststellen einer Mehrzahl von Änderungen eines für zumindest eine Abmessung des Produkts (10) repräsentativen Parameters, wobei der Parameter mit Hilfe eines elektronischen Sensors (2) erfasst wird und der Sensor (2) in der Produktpräsentationsvorrichtung (1) lokalisiert ist,
- Speichern von Änderungsdaten, welche die jeweils erfasste Parameter-Änderung repräsentieren,
- Auswerten der Änderungsdaten, wobei anhand eines zeitlichen Verhaltens und/oder eines wertmäßigen Verhaltens der Parameter-Änderungen zwischen Parameter-Änderungen unterschieden wird, die nicht zur Bestimmung der zumindest einen Abmessung heranzuziehen sind und solchen Parameter-Änderungen, die zur Bestimmung der zumindest einen Abmessung heranzuziehen sind,

## Beschreibung

### Technisches Feld

Die Erfindung betrifft ein Verfahren zur Bestimmung einer Abmessung eines Produkts in einer Produktpräsentationsvorrichtung.

Die Erfindung betrifft weiterhin ein Verfahren zur Warenbestandsüberwachung in einer Produktpräsentationsvorrichtung.

### Hintergrund

Im Einzelhandel besteht das langgehegte Bedürfnis, zuverlässige Informationen betreffend die Abmessungen der zum Verkauf angebotenen Produkte bzw. deren Verpackungen zur Verfügung zu haben. Diese Abmessungen können im Einzelhandel zur Optimierung der Nutzung der verfügbaren Präsentationsfläche wie auch zur Steuerung der Warenlogistik genutzt werden. Bei der Warenlogistik geht es z.B. darum, den richtigen Zeitpunkt für das Nachschlichten von Produkten zu erkennen, um diesen Prozess effizient zur Anwendung zu bringen, also nicht zu früh damit zu starten, wodurch Human-Ressourcen unnötig gebunden werden, oder auch nicht zu spät damit zu starten, weil es bei zu spätem Start zu Engpässen in der Verfügbarkeit des betreffenden Produkts in einem Regal kommen kann, was sich wiederum negativ auf die Verkaufszahlen auswirken kann.

Üblicherweise stellen die Produzenten der Produkte die Abmessungen der Produkte nicht systematisch zur Verfügung. Auch können sich die Abmessungen im Laufe der Zeit verändern, weil z.B. die Verpackung Änderungen unterworfen ist.

Zudem haben Einzelhändler nicht die Ressourcen, die Abmessungen der Vielzahl der im Geschäft zu präsentieren Produkte manuell zu erfassen, eine systematische, insbesondere digitalisierte, Datenbasis diesbezüglich aufzubauen und diese insbesondere fortlaufend zu pflegen.

Die Erfindung hat sich daher die Aufgabe gestellt, eine Lösung für diese Problematik bereitzustellen

### Zusammenfassung der Erfindung

Diese Aufgabe wird durch ein Verfahren gemäß Anspruch 1 gelöst. Der Gegenstand der Erfindung ist daher ein Verfahren zur Bestimmung einer Abmessung eines in einer Produktpräsentationsvorrichtung platzierten Produkts, wobei das Verfahren die folgenden Schritte aufweist, nämlich automatisches Feststellen der Änderung eines für zumindest eine Abmessung des Produkts repräsentativen Parameters, wobei der Parameter mit Hilfe eines elektronischen Sensors erfasst wird und der Sensor in der Produktpräsentationsvorrichtung lokalisiert ist, und automatische Ermittlung von zumindest einer Abmessung des Produkts basierend auf der festgestellten Änderung des Parameters.

Diese Aufgabe wird weiterhin durch ein Warenbestandüberwachung-Verfahren gemäß dem Anspruch 11 gelöst. Der Gegenstand der Erfindung ist daher ein Warenbestandüberwachung-Verfahren zum Überwachen des Warenbestands in einer Produktpräsentationsvorrichtung, in der zumindest ein Produkt platzierbar ist, wobei für das Produkt zumindest eine Abmessung, die für die Warenbestandüberwachung repräsentativ ist, insbesondere die Tiefe des Produkts, vorab bekannt ist, insbesondere nach dem erfindungsgemäßen Verfahren zur Bestimmung eines in der Produktpräsentationsvorrichtung platzierten Produkts bestimmt wurde, wobei das Warenbestandüberwachung-Verfahren die nachfolgend angeführten Verfahrensschritte aufweist, nämlich automatisches Feststellen der Änderung eines für zumindest eine Abmessung des Produkts repräsentativen Parameters, wobei der Parameter mit Hilfe eines elektronischen Sensors erfasst wird und der Sensor in der Produktpräsentationsvorrichtung lokalisiert ist, und automatisches Ermitteln einer Veränderung der Produktanzahl, wobei die Änderung des repräsentativen Parameters gegenüber der zumindest einen für die Warenbestandüberwachung repräsentativen Abmessung bewertet wird.

Mit den erfindungsgemäßen Maßnahmen geht daher der Vorteil einher, dass direkt in einer Produktpräsentationsvorrichtung die zur Optimierung der Nutzung der verfügbaren Präsentationsfläche wie auch für eine optimierte Warenlogistik benötigte zumindest eine Abmessung entkoppelt vom Hersteller bzw. Lieferanten des Produkts, also unabhängig von Angaben des Herstellers bzw. des Lieferanten, die veraltet oder unvollständig sein können oder auch zeitlichen Änderungen unterworfen sind, automatisch bestimmt wird und dann zur Verfügung steht.

Da die erfindungsgemäßen Maßnahmen eine automatische wie auch dynamische, also über den zeitlichen Verlauf automatisierte Bestimmung der zumindest einen Abmessung des Produkts direkt im Regal erlauben, kann also auf die manuelle Erfassung der Abmessungen des Produkts vollständig verzichtet werden. Gemäß dem Verfahren ist es sogar zum Zeitpunkt der Bestimmung der zumindest einen Abmessung des Produkts bedeutungslos, welches spezielle Produkt sich im Regal befindet. Die Zuordnung zwischen dem tatsächlichen Produkt und der erfassten Abmessung kann zu einem anderen Zeitpunkt erfolgen.

Die Bestimmung der Abmessung ist somit viel flexibler als eine auf Grundlage von Herstellerangaben kreierte und aufwändig manuell zu wartende zentrale digitale Datenbasis, in der eine Verknüpfung zwischen Produkt und Abmessung zentral gespeichert über einen Server bereitgestellt wird. Der Aufbau einer solchen digitalen Datenbasis kann nun vollautomatisch auf Grundlage der automatisch bestimmten zumindest einen Abmessungen erfolgen, wobei die jeweilige zumindest eine Abmessung direkt an jenem Ort, wo die Produkte in der Produktpräsentationsvorrichtung präsentiert werden, ermittelt wird. Die vollautomatisch ermittelte Abmessung des Produkts kann sodann in vielfältiger Weise in einem Warenbestandsüberwachung-Verfahren zum Einsatz kommen.

Weitere, besonders vorteilhafte Ausgestaltungen und Weiterbildungen der Erfindung ergeben sich aus den abhängigen Ansprüchen sowie der nachfolgenden Beschreibung.

Als Parameter bzw. dessen Änderung, der sich mit dem Sensor erfassen lässt, wobei der Sensor natürlich für die Erfassung des jeweiligen Parameters ausgebildet ist, seien hier in nicht abschließender Weise angeführt:
- eine Änderung der Licht- oder Signaleinstrahlung,
- eine Änderung eines Drucks,
- eine Änderung einer Signallaufzeit,
- eine Änderung der optischen Abbildung eines optisch erfassten Objekts, usw.

Die Produktpräsentationsvorrichtung kann als eigenständige Vorrichtung realisiert sein, die beispielsweise in einem Regal platziert wird. Die Produktpräsentationsvorrichtung kann jedoch auch eine Regalreihe bzw. eine Regaletage oder ein ganzes Regal bildet. Es kann sich bei der Produktpräsentationsvorrichtung auch beispielsweise um einen Verkaufstisch oder auch um einen Verkaufsautomaten handeln.

Die Produktpräsentationsvorrichtung weist zumindest eine Höhe, eine Tiefe und eine Breite auf, wobei sich die Höhe im Wesentlichen entlang der Fallbeschleunigung erstreckt. Die Tiefe entspricht einer Länge zwischen einem vorderen Rand der Produktpräsentationsvorrichtung und einem hinteren Rand der Produktpräsentationsvorrichtung. Weist die Produktpräsentationsvorrichtung eine Ablagestruktur auf, wie z.B. einen Regalboden, dann erstreckt sich die Tiefe entlang dieses Regalbodens von dessen vorderem Rand zu seinem hinteren Rand. Die Breite erstreckt sich entlang des vorderen oder hinteren Randes der Produktpräsentationsvorrichtung.

Kommt eine Ablagestruktur zur Anwendung, so kann es sich dabei beispielsweise um einen Regalboden oder auch einen Verkaufstisch zur Präsentation von Produkten handeln. Der hintere und der vordere Rand werden hierbei durch die Abgrenzung eines Ablagebereichs gebildet, in dem der eine Gegenstand oder mehrere Gegenstände auf der Ablagestruktur abgelegt werden können.

Auch können vor dem vorderen Rand bzw. hinter dem hinteren Rand weitere Strukturelemente der Produktpräsentationsvorrichtung mit anderen Aufgaben vorhanden sein. So kann vor dem vorderen Rand beispielsweise noch eine Regalschiene zum Anbringen von (z.B. elektronischen) Regaletiketten oder auch ein schlanker Bildschirm, der im Wesentlichen die Regalschiene abdeckt oder sie selbst bildet (Video-Regalschiene), vorhanden sein.

Unter einem Produkt kann ganz allgemein eine Ware mit oder ohne Verpackung verstanden werden. Die Produkte, die sich in der Produktpräsentationsvorrichtung befinden, lassen sich ebenfalls zumindest mit diesen drei Dimensionen bzw. Abmessungen (Produkt-Höhe, -Tiefe, - Bereite) beschreiben, wobei diese Produkt-Dimensionen in einem lokalen kartesischen Koordinatensystem des jeweiligen Produkts definiert sind, das sich von jenem (kartesischen) Koordinatensystem der Produktpräsentationsvorrichtung unterscheiden kann. Ist ein Produkt z.B. auf einer in Bezug auf die Fallbeschleunigung schräg geneigten Ablagestruktur, wie etwa einem Regalboden, in einer Produktpräsentationsvorrichtung abgelegt, so bildet die Ebene der Ablagestruktur eine Bezugsebene, in der sich zwei der Produkt-Dimensionen (z.B. die Tiefe und die Breite) erstrecken. Die Dimension der Produkt-Höhe erstreckt sich in diesem Beispiel normal auf die Bezugsebene und ihre Richtung weicht daher von jener der Fallbeschleunigung ab. Bei der Bestimmung der Produkt-Dimensionen bzw. Abmessungen ist also darauf zu achten, dass das korrekte Koordinatensystem zum Einsatz kommt, also z.B. der Sensor im Produkt-Koordinatensystem oder relativ dazu korrekt ausgereichtet ist oder eine computerunterstütze rechnerische Anpassung bzw. Korrektur erfolgt.

Grundsätzlich können Produkte unterschiedlichste Formen und infolgedessen unterschiedliche Abmessungen aufweisen. Für die Warenlogistik bzw. das Regalmanagement bilden im Allgemeinen die Tiefe, Höhe und Breite des Produkts die relevanten Abmessungen, weshalb nachfolgend Ausbildungsformen zum Erfassen dieser Abmessungen erörtert werden. Es sei jedoch angemerkt, dass der Fachmann die hier präsentierte Lehre auch zum Erfassen anderer Abmessungen heranziehen kann, wie z.B. die Länge der Produkt- bzw. Produktverpackung-Diagonale oder des Produktumfangs oder das Produktvolumens.

Der Sensor kann für die Zwecke seiner Erfassungstätigkeit eine fixe Erfassungsrichtung bzw. einen fixen Erfassungsbereich aufweisen. Der Sensor kann jedoch auch derart ausgebildet sein, dass er eine variable Erfassungsrichtung bzw. einen variablen Erfassungsbereich aufweist, der entweder mechanisch oder elektronisch bzw. elektromechanisch einstellbar bzw. veränderbar ist. Damit lassen sich wahlweise unterschiedliche Bereiche in der Produktpräsentationsvorrichtung erfassen. Bevorzugt sollte die dominierende bzw. mittlere Erfassungsrichtung des Sensors entsprechend dem Produkt-Koordinatensystem ausgerichtet sein, um eine möglichst einfache Bestimmung der zumindest einen Abmessung zu ermöglichen. Sind also Produkte auf einem schrägen gegen die Fallbeschleunigung geneigten Regalboden platziert, ist es vorteilhaft, wenn für einen z.B. am hinteren Rand des Regalbodens positionierten Sensor ebenfalls eine analoge Neigung gegenüber der Fallbeschleunigung vorgesehen ist, sodass die Erfassungsrichtung im Wesentlichen parallel zum Regalboden verläuft.

Der Erfassungsbereich des Sensors kann sich je nach Sensorart und Ausführung unterscheiden und beispielsweise linienartig, zylindrisch, kegelförmig oder auch keulenförmig sein, insbesondere jedoch hinsichtlich seiner Weite softwarebasiert modellierbar sein bzw. einstellbar sein. Hierfür kann der Sensor z.B. mit einem optoelektronischen Erfassungssystem ausgerüstet sein, das eine optische Linsenkonfiguration (eine oder mehrere Linsen, ggf. sogar mit Autofokusfunktion) und ein benachbartes Sensorarray aufweist, auf welches die Linsenkonfiguration ein Abbild der erfassten Umgebung bzw. des erfassten Objekts abbildet. Durch softwarebasierte selektive Aktivierung (Miteinbeziehung) oder Deaktivierung (Auslassung bzw. Ausblendung) von Elementen des Sensorarrays (insbesondere der Randbereiche) bei der Erfassung lässt sich der Öffnungswinkel an den jeweiligen zu erfassenden Schauplatz anpassen.

Die Weite des Öffnungswinkels kann je nach Anforderung ringförmig oder auch entlang einer Funktion verlaufend veränderbar sein oder in unterschiedlichen Richtungen individuell, also unabhängig voneinander einstellbar sein. So kann z.B. eine erste Weite des Öffnungswinkels in der Ebene oder parallel zu der Ebene der Ablagestruktur von Sensor zu Sensor unterschiedlich und an die individuell zu erfassende Gegenstandsgrößen oder auch deren Gruppierung, im Allgemeinen deren Stellplätze bzw. die Ausdehnung der Stellplätze, angepasst sein. Demgegenüber kann für alle installierten Sensoren oder zumindest für eine Gruppe dieser Sensoren eine zweite Weite des Öffnungswinkels in einer zu der Ebene der Ablagestruktur quer verlaufenden Ebene identisch eingestellt sein. Somit können unterschiedlich breite Bereiche in einem Regal von unterschiedlichen Sensoren überwacht werden, wohingegen der Abstand zwischen Regalböden nicht in die Erfassung einfließt, weil die Regalböden durch die relativ gering (schmal) eingestellte zweite Weite nicht erfasst werden, also keine Erfassungsfehler auftreten.

Gemäß einem weiteren Aspekt ist der Sensor entweder ortvariabel positionierbar oder fix verortet, worauf nachfolgend im Detail eingegangen wird.

Zum Erfassen des für die Ermittlung repräsentativen Parameters bzw. für die Feststellung von dessen Änderung kann der Sensor von unterschiedlicher Richtung her oder mit unterschiedlicher Orientierung wie auch von unterschiedlichen Orten her seine Erfassung durchführen.

Die Erfassung lässt sich also aus verschiedenen Erfassungspositionen heraus durchführen, worauf nachfolgend eingegangen ist.

Der Sensor kann stationär an der Produktpräsentationsvorrichtung, wie z.B. hinter den Produkten, also beispielsweise produktseitig an der Rückwand eines Regals bzw. am hinteren Rand, platziert sein. In dieser fixen Position hat der Sensor einen unbeweglichen Erfassungsbereich bzw. eine unbewegliche Erfassungsrichtung. Daher kann es von Vorteil sein, wenn ein Sensor mit manuell oder auch elektronisch einstellbarem variablen Erfassungsbereich bzw. variabler Erfassungsrichtung zum Einsatz kommt, um eine zielgerichtete Erfassung durchführen zu können. Aus dieser Erfassungsposition heraus lässt sich die Tiefe, die Briete und die Höhe für ein Produkt ermitteln.

Analog kann der Sensor auch an einer fixen Position oberhalb der Produkte positioniert sei und von dort her die Erfassung durchführen. Auch aus dieser Erfassungsposition heraus lassen sich die Tiefe, die Breite und die Höhe ermitteln.

Der Sensor kann jedoch auch von unten her, also von unterhalb der Produkte her, seine Erfassung durchführen. Aus dieser Erfassungsposition heraus lassen sich zumindest die Tiefe und die Breite des Produkts ermitteln.

Der Sensor kann jedoch auch auf einem Sensorbewegungssystem montiert sein, das den Sensor hinter den Produkten oder auch oberhalb der Produkte bewegt. Die Erfassungsrichtung bzw. der Erfassungsbereich bewegt sich also mit dem bewegten Sensor durch die Produktpräsentationsvorrichtung. Da der Sensor als solches bereits bewegt ist und sich sein Erfassungsbereich also mit ihm mit bewegt, kann es in diesem Fall vorteilhaft sein, dass ein Sensor mit einer fixen Erfassungsrichtung zum Einsatz kommt. Situationsspezifisch kann ein flexibler, variabler Erfassungsbereich oder ein fixer Erfassungsbereich zum Einsatz kommen. Diese bewegte, also ortsvariable Erfassungsposition erlaubt die bereits im Zusammenhang mit der fixen Erfassungsposition erwähnte Ermittlung der angeführten Dimension, jedoch in weiteren Bereichen der Produktpräsentationsvorrichtung, also z.B. für einzelne Produktgruppen an unterschiedlichen Positionen oder auch Produktgruppenübergreifend.

Das Sensorbewegungssystem kann zumindest eine der nachfolgend angeführten Ausbildungen aufweist, nämlich: ein seilzugbasiertes Sensorbewegungssystem, ein riemenbasiertes Sensorbewegungssystem, ein zahnrad- bzw. zahnstangenbasiertes Sensorbewegungssystem, ein gewindebasiertes Sensorbewegungssystem, ein magnetbasiertes Sensorbewegungssystem.

Auch können diese Ausbildungsformen kombiniert auftreten. So kann beispielsweise ein seilzugbasiertes Sensorbewegungssystem oder ein riemenbasiertes Sensorbewegungssystem die horizontale Bewegung bzw. Positionierung des Sensors übernehmen, während ein gewindebasiertes Sensorbewegungssystem die vertikale Bewegung bzw. Positionierung des Sensors übernimmt.

Der Sensor kann jedoch auch auf oder an einer Beförderungsvorrichtung positioniert sein, wobei die Beförderungsvorrichtung das Produkt in der Produktpräsentationsvorrichtung befördert, während gleichzeitig auch der Sensor mitbefördert wird. Bei dieser ortsvariablen Erfassungspositionierung handelt es sich um eine mitbewegte Erfassungsposition, aus der heraus der Sensor seine Erfassung in Bezug auf ein Referenzobjekt durchführt. Bei dieser mitbewegten Erfassungsposition ist der Sensor so platziert, dass er sich mit den Produkten mit bewegt und sozusagen "von vorne her" in Richtung eines Referenzobjekts, beispielsweise in Richtung der Rückwand oder des hinteren Rands der Ablagestruktur oder der Präsentationsvorrichtung orientiert die Erfassung durchführt. Als Referenzobjekt kann die Rückwand oder eine andere geeignete Begrenzung- oder Bezug-Struktur am hinteren Rand eines Regalbodens oder eines Regals dienen. Auch kann es sich beispielsweise bei der Produktpräsentationsvorrichtung um ein Regal ohne Rückwand handeln, wobei die dahinterliegende Wand des Geschäftsgebäudes das Referenzobjekt bilden kann.

Es kann der Sensor also z.B. an einem Drücker bzw. einer Drückerplatte befestigt sein, der die Produkte zum vorderen Rand der Produktpräsentationsvorrichtung hin drückt bzw. schiebt, und die Erfassungsrichtung des Sensors hin zum hinteren Rand orientierte sein, wobei z.B. eine dort befindliche Wand als Referenzobjekt fungiert. Alternativ kann auch eine Spirale verwendet werden, die in Drehung versetzt werden kann, um die Produkte in ihrer Spiralstruktur (also der Windung) zum vorderen Rand der Produktpräsentationsvorrichtung zu bewegen. Der Sensor kann bei diesen Ausbildungsformen ebenfalls in der Spirale hinter dem letzten Produkt positioniert sein, ggf. auch an dem Drücker oder Träger befestigt sein, und von seiner jeweiligen Position entlang der Spirale aus in Richtung des hinteren Rands die Erfassung durchführen. Aus dieser Erfassungsposition heraus lässt sich jedenfalls die Tiefe eines Produkts ermitteln.

Eine solche Drückerplatte kann beispielsweise ebenfalls dazu ausgebildet sein, dass sie unter dem Schwerkrafteinfluss Gegenstände zum vorderen Rand der Ablagestruktur bewegen. In den meisten Fällen ist es jedoch vorteilhaft, wenn die Produktpräsentationsvorrichtung einen Produktführungsantrieb aufweist, der beispielsweise die Drückerplatte oder die Spirale bewegt. Dieser Antrieb kann mit Hilfe eines elektromotorischen Elements oder auch mit Hilfe eines elastischen Elements, wie etwa einer Feder, realisiert sein, die z.B. beim Bestücken der Ablagestruktur mit Gegenständen gespannt wird und sich nach bzw. während der Entnahme eines Gegenstands teilweise entspannt und die verbleibenden Gegenstände hin zum vorderen Rand der Ablagestruktur bewegt.

Auch können mehrere Sensoren an unterschiedlichen (stationären oder ortsvariablen) Erfassungspositionen und mit unterschiedlichen Erfassungsrichtungen, insbesondere einander kreuzenden Erfassungsrichtungen zum Einsatz kommen, um für ein und dasselbe Produkt kombiniert die Erfassung durchzuführen. Die von diesen räumlich verteilten Erfassungspositionen heraus erfassten Änderungen der für die Abmessung des Produkts repräsentativen Parameter können nach ihrer Erfassung kombiniert verarbeitet werden, um bespielweise eine bessere bzw. genauere Charakterisierung bzw. Bewertung betreffend die festgestellte Änderung vorzunehmen. Auch kann so eine Differenzierung der festgestellten Änderung in unterschiedliche Richtungen (nämlich entsprechend der Erfassungsrichtungen) erfolgen, wodurch auch Positionsänderungen für die mit mehreren Sensoren erfassten Produkte (stationären oder ortsvariablen) abgeleitet werden können. Hierbei können auch Sensoren unterschiedlicher Typen an unterschiedlichen Erfassungspositionen zum Einsatz kommen.

Es existieren also innerhalb der Produktpräsentationsvorrichtung unterschiedliche Positionierungsmöglichkeiten zum Feststellen mindestens eines Parameters bzw. dessen Änderung, die für zumindest eine Abmessung des Produkts repräsentativ ist, um daraus zumindest eine der Abmessungen bzw. Dimensionen Höhe, Breite oder Tiefe des Produkts zu bestimmen.

Die Ermittlung der jeweiligen Abmessung bzw. Dimension erfolgt auf Grundlage des Erfassungsergebnisses oder der Erfassungsergebnisse des Sensors, welche/welches repräsentiert durch Erfassungsdaten vom Sensor bereitgestellt werden, durch eine Datenverarbeitungsvorrichtung, die direkt im Sensor selbst oder extern dazu lokalisiert sein kann, wie beispielsweise mittels eines Server oder mittels einer cloud-basierten Lösung, wobei eine Auswertungssoftware ausgeführt wird, welche die Erfassungsdaten hinsichtlich der Abmessung(en) bzw. Dimension(en) des Produkts auswertet. So kann der Sensor gemäß einer bevorzugten Ausbildungsform dazu ausgebildet sein, eine Erfassung zyklisch, insbesondere periodisch, durchzuführen. Zu diesem Zweck kann er eine Timer-Elektronik aufweisen. Der Sensor kann also beispielsweise im zeitlichen Abstand einiger Sekunden eine Erfassung durchführen. Auch können Erfassungen in nicht-periodischen oder auch ungleichmäßig langen Zeitabständen durchgeführt werden. Es ist auch möglich, dass die Erfassung in zufälligen Abständen innerhalb eines Zeitbereichs oder verteilt über die Öffnungszeit eines Geschäftslokals oder verteilt über den Tag erfolgen.

Der Sensor kann seine Erfassungsdaten kabelgebunden weitergeben bzw. abgeben. Auch können mehrere Sensoren einer Produktpräsentationsvorrichtung oder auch mehrere Sensoren von mehreren Produktpräsentationsvorrichtungen ihre Erfassungsdaten kabelgebunden an ein separates Funkmodul übermitteln, wobei dieses Funkmodul dazu ausgebildet ist, die Erfassungsdaten kabellos weiterzuleiten. Das Funkmodul überträgt also die Erfassungsdaten einer Gruppe von Sensoren einer oder unterschiedlicher Produktpräsentationsvorrichtungen. Eine solche Gruppe kann beispielsweise aus den Produktpräsentationsvorrichtungen, die jeweils eine Regalreihe bilden, oder aus Produktpräsentationsvorrichtungen, die sich jeweils in einer Regalreihe oder jeweils in einem Regal befinden, gebildet sein.

Gemäß einer bevorzugten Ausbildungsform ist der Sensor dazu ausgebildet, seine Erfassungsdaten, die das Erfassen des Gegenstands bzw. Produkts repräsentieren, funkbasiert abzugeben. Besonders bevorzugt weist der Sensor selbst ein (integriertes) Funkmodul auf. Ist der Sensor selbst zur Ermittlung der zumindest einen Abmessung ausgebildet, gibt er die so ermittelte Abmessung ebenfalls über das Funkmodul zur weiteren Verarbeitung ab.

Der Sensor kann unterschiedliche Ausbildungen aufweisen oder auch eine Kombination verschiedener Sensortechnologien bzw. Ausbildungen aufweisen. So kann für die Erfassung von unten her der Sensor beispielsweise als druckempfindlichen Sensormatte ausgebildet sein, die mehrere über die Fläche der Sensormatte verteilte, druckempfindliche Elemente, wie z.B. mechanische oder kapazitive Detektionselemente, aufweist, die einen Stromkreis schließen bzw. dessen Charakteristik beeinflussen, wenn ein Produkt auf der Sensormatte platziert wird. Analog kann auch eine Sensormatte mit einem Array aus lichtempfindlichen Elementen zum Einsatz kommen, bei dem durch auf dem Array abgelegte Produkte eine Anzahl dieser lichtempfindlichen Elemente abgedeckt und somit abgedunkelt wird, was elektronisch detektierbar ist. Mit diesen Lösungen lassen sich aus der Erfassungsposition von unten her zumindest die Dimensionen Tiefe und Breite eines Produkts erfassen. Alle diese Ausbildungsformen haben gemeinsam, dass die Sensorelemente mit dem Produkt einen Kontakt eingehen müssen, um zuverlässige Erfassungsergebnisse zu liefern.

Für eine Erfassung aus einer anderen Erfassungsposition heraus, wie beispielsweise von oberhalb der Produkte her oder von hinter den Produkten her, hat es sich als besonders vorteilhaft erwiesen, wenn der Sensor zumindest eine der nachfolgend angeführten Ausbildungen (Funktionsprinzipien) aufweist, nämlich:
- Time-of-Flight-Sensor bzw. ein Laufzeitsensor
- Kamera
- 3D-Kamerasystem
- Time-of-Flight-Kamera
- LIDAR (Abkürzung für "Light detection and ranging" auch "Light imaging, detection and ranging").

Alle diese Ausbildungsformen haben gemeinsam, dass sie mit dem Produkt keinen direkten Kontakt einnehmen müssen, um zuverlässige Erfassungsergebnisse zu liefern. In diesem Zusammenhang sei hervorgehoben, dass die hier erwähnten Sensoren auch für die mitbewegte Erfassungsposition hervorragend geeignet sind.

Um auch noch weitere für den Einzelhandel nützliche Informationen direkt im Regal erfassen zu können, kann vorgesehen sein, dass der Sensor zusätzliche Parameter, wie z.B. Gewicht oder Temperatur, miterfasst.

Grundsätzlich könnte die Ermittlung der Abmessung des Produkts kontinuierlich, also fortlaufend erfolgen. Dies kann unter gewissen Umständen erwünscht sein, wenn z.B. biologische natürlich gewachsene Produkte, die grundsätzlich jeweils individuelle Abmessungen aufweisen, berücksichtigt werden müssen. Unter anderen Umständen kann es jedoch erwünscht sein, die Abmessung nicht andauernd zu bestimmen. Daher kann es von Vorteil sein, wenn bei dem Verfahren die Ermittlung der Abmessung des Produkts nur dann erfolgt, wenn eine Lernphase ausgelöst wurde.

Ist die Lernphase ausgelöst, kann die zumindest eine Abmessung des Produkts gezielt innerhalb der Lernphase ermittelt werden, bevor diese nun definierte, also bekannte Abmessung weiterverwendet wird. Die Lernphase kann wieder beendet werden. Dies kann manuell erfolgen oder auch automatisch, z.B. durch den Umstand, dass die automatisch ermittelte Abmessung im Laufe der Zeit auf einen Wert konvergiert. Die ermittelte Abmessung wird gespeichert und steht für die Optimierung der Nutzung der verfügbaren Präsentationsfläche wie auch für weitere Warenlogistik bereit. Somit ist nach Beendigung der Lernphase für ein Produkt zumindest ein Wert für zumindest eine seiner Abmessungen fixiert, bis eine neue Lernphase gestartet wird. Ein fixierter Wert ermöglicht eine einfache und somit unkomplizierte und übersichtliche Warenlogistik, weil nicht auf sich immer wieder verändernde Daten eingegangen werden muss.

Die Lernphase kann beispielsweise durch bei dem Sensor empfangene Signale ausgelöst oder auch wieder beendet werden, wobei eine kabelgebundene oder eine kabelungebundene Übermittlung des Signals realisierbar ist. Hierzu kann beispielsweise ein Knopf vorgesehen sein, der bei Betätigung das Signal übermittelt. Auch kann zum Beispiel ein Mobiltelefon mit entsprechender Applikation ein solches Signal funkbasiert übermitteln.

Alternativ zu diesem externen Auslöser kann auch ausgehend von der automatisch festgestellten Änderung des Parameters die Lernphase automatisch gestartet werden. Die Lernphase wir also auf Grund eines internen Auslösers gestartet.

Daher hat es sich als besonders vorteilhaft erwiesen, dass die festgestellte Änderung des repräsentativen Parameters auf zumindest einen Auslöser überprüft wird und beim Feststellen des Vorhandenseins dieses Auslösers die Lernphase ausgelöst wird.

Ein solcher Auslöser kann sein, dass zumindest eine den repräsentativen Parameter beschreibende Größe einen bestimmten Wert einnimmt, unterschreitet oder überschreitet. Es kann also zur Auslösung kommen, wenn der Parameter oder seine Änderung einen Schwellwert überschritten oder unterschritten oder wenn der Parameter bzw. seine Änderung innerhalb oder außerhalb eines bestimmten Erwartungsbereiches liegt. So kann der Auslöser beispielsweise darin bestehen, dass der Sensor eine Größe des Parameters erfasst, die einen Hinweis darauf gibt, dass die Produktpräsentationsvorrichtung bzw. ein Abschnitt der selbigen leer ist, weil beispielsweise in Richtung der Tiefe der Produktpräsentationsvorrichtung ein Abstand zu einem fiktiven Produkt gemessen wird, der größer oder gleich der Tiefe der Produktpräsentationsvorrichtung bzw. der dort vorgesehenen Ablagestruktur ist.

Ausgehend von diesem internen Auslöser kann überwacht werden, wann wieder neue Produkte nachgeschlichtet werden. Hierbei ist es jedoch belanglos, ob es sich um dieselben Produkte mit denselben Abmessungen wie zuvor handelt oder ob andere Produkte mit anderen Abmessungen als zuvor nachgeschlichtet werden. Mit Hilfe des Verfahrens wird nämlich immer die aktuelle zumindest eine Abmessung des Produkts bestimmt und für die optimale Nutzung der Präsentationsfläche wie auch die Optimierung der Warenlogistik bereitgestellt. Dies erlaubt eine dynamische Umgestaltung des Geschäftslokals bzw. der Regalbestückung, wie beispielsweise angepasst an Marketingaktionen usw., und zwar ohne jeglichen manuellen Anpassungsaufwand hinsichtlich der zu berücksichtigenden Produktabmessung(en), weil diese ja im Zuge der Bestückung der Regale mit Produkten automatisiert bereitgestellt werden.

Ein solcher interner Auslöser kann also auch auf der Änderung der den repräsentativen Parameter beschreibenden Größe im zeitlichen Kontext beruhen. So kann beispielsweise der Auslöser darauf beruhen, dass die aus der Änderung des repräsentativen Parameters errechnete, zumindest eine Abmessung bei automatischer wiederholter Kontrolle über einen Zeitraum hinweg nicht mit der zuvor gespeicherten bzw. zuvor ermittelten Abmessung übereinstimmt. Es wird also automatisch erkannt, wenn sich die zumindest eine Abmessung des Produkts bzw. der Produkte in der Produktpräsentationsvorrichtung ändert, weil beispielsweise andere Produkte oder Produkte mit einer anderen Verpackung oder auch mit einer anderen Orientierung in der Produktpräsentationsvorrichtung platziert wurden. Dies kann auch zur Erkennung von Unordnung in einem Regal dienen, um in Folge im Sinne der Warenlogistik einen Klärungs- bzw. Neuordnungsprozess zu starten.

Der Auslöser kann auch darin bestehen, dass die festgestellte Änderung des repräsentativen Parameters außerhalb eines zuvor definierten Bereiches liegt.

Der Auslöser kann beispielsweise auch auf der Erkennung eines Musters, insbesondere im zeitlichen Kontext beruhen. So kann der Auslöser zum Beispiel so vordefiniert sein, dass ein eingeschulter Mitarbeiter dreimal mit seiner Hand mit einer bestimmten Frequenz durch den Erfassungsbereich des Sensors winkt oder dreimal mit dieser bestimmten Frequenz auf den Sensor drückt, um den Auslöser zu verursachen. So kann der Mitarbeiter dem System, das das erfindungsgemäße Verfahren ausführt, einfach mitteilen, dass ein Produkt mit neuen Abmessungen in der Produktpräsentationsvorrichtung platziert wird und eine neue Erfassung von zumindest einer Abmessung gewünscht wird. Der Sensor ist im vorliegenden Fall dazu ausgebildet diese spezielle Handbewegung auf Grundalge der dazu auftretenden Änderung der Erfassungsergebnisse zu identifizierten.

Auch kann (z.B. im Sensor integriert) eine künstliche Intelligenz vorgesehen sein, die auf Grundlage von zuvor trainierten Kriterien den Auslöser erkennt. Auch hier wird bei festgestelltem Auslöser eine neue Ermittlung der zumindest einen Abmessung durchlaufen. Auch kann die künstliche Intelligenz selbständig auf Basis des Trainings die Bedingungen für das Vorliegen eines Auslösers festlegen. Wie im Weiteren noch erörtert, kann auch für die Ermittlung der Abmessung eine künstliche Intelligenz vorgesehen sein.

Für die automatische Ermittlung der zumindest einen Abmessung haben sich mehrere Ausbildungsformen als vorteilhaft herausgestellt.

So kann die Ermittlung der Abmessung des Produkts direkt aus einer einzigen Änderung des Parameters erfolgt.

"Direkt" bedeutet hier, dass aus einer einzigen Änderung des Parameters auf die Abmessung geschlossen werden kann, weil die Änderung des Parameters (z.B. die Laufzeitänderung eines Signals im Falle eines Laufzeit-Sensors) umgerechnet auf die dazu korrespondierende Wegänderung z.B. direkt der zu bestimmenden Abmessung des Produkts gleichgesetzt wird. Wie erörtert, kann es sich bei dem Sensor um eine die Sensormatte bildende Schaltermatte mit mehreren gleichmäßig über die Oberfläche der Matte verteilten Kontakten handeln, die sich schließen, wenn ein Gegenstand darauf platziert wird, wobei elektronisch feststellbar wird, wie viele solcher Kontakte (in einer Reihe) betätigt wurden. In diesem Fall entspricht die Änderung des Parameters der Anzahl der Kontakte in einer Richtung die geschlossen oder geöffnet werden. Mit der Kenntnis über die Distanz zwischen den Kontakten kann durch Multiplikation der Anzahl der betätigten Kontakte mit der Distanz auf die Abmessung des Produkts umgerechnet werden.

Die Ermittlung der Abmessung des Produkts direkt aus einer einzigen Änderung des Parameters ist besonders vorteilhaft, weil nur sehr wenig Speicher- und Rechenleistung vom ermittelnden Gerät bzw. von der Datenverarbeitungsvorrichtung benötigt wird. So kann diese beispielsweise problemlos im Sensor selbst untergebracht sein. Weiterhin erlaubt diese Ausbildungsform eine eindeutige Rückverfolgung, woher die gemessenen Werte stammen. Weil hier im Wesentlichen eine einzige Änderung der Produktanzahl ausreicht, um ein Messergebnis zu erhalten, kann dieses einfach überprüft und nachvollzogen werden. Ordnet ein Mitarbeiter beispielsweise neue Waren in die Produktpräsentationsvorrichtung ein, kann dieser sofort die ermittelten Abmessungen abfragen und auf Plausibilität überprüfen. Fehler, beispielsweise durch beschädigte Sensorelemente, können so sofort erkannt werden.

Gemäß einer weiteren bevorzugten Ausbildungsform kann die Ermittlung der Abmessung des Produkts aus einer Mehrzahl von Änderungen des Parameters erfolgen.

Hierfür werden mehrere Änderungsvorgänge automatisiert festgestellt und mit Hilfe von Änderungsdaten, welche die jeweils erfasste Parameter-Änderung repräsentieren, gespeichert und ausgewertet. Hierfür können beispielsweise vorprogrammierte Algorithmen sowie statistische Methoden zur Anwendung kommen.

Die Ermittlung der Abmessung des Produkts aus einer Mehrzahl von Änderungen des Parameters bietet den Vorteil, dass eine genauere Bestimmung der zumindest einen Abmessung möglich ist und dass Fehler, insbesondere Erfassungsfehler, erkannt und auch ausgefiltert werden können. Auch kann zwischen Parameter-Änderungen unterschieden werden, die nicht zur Bestimmung der zumindest einen Abmessung heranzuziehen sind, weil z.B. ihr zeitliches Verhalten und/oder ihr wertmäßiges Verhalten auf das Vorhandensein einer Handbewegung im Regal verursacht durch Nachschlichtprozesse eines Mitarbeiters oder Produktentnahme eines Kunden schließen lässt, und solchen, die zur Bestimmung der zumindest einen Abmessung heranzuziehen sind, weil sich z.B. aus dem erwähnten zeitlichen wie auch wertmäßigem Verhalten drauf schließen lässt, dass es sich nicht um die erwähnten Handbewegungen handeln kann. Handbewegungen können nämlich wertmäßig gut eingegrenzt werden, weil die Abmessungen (Briete / Dicke) von Händen gut vorhersagbare sind und auch die Geschwindigkeit der Hände im Regal durch Messexperimente erfasst gut vorhersagbar sind.

Ein solcher vorprogrammierter Algorithmus kann beispielsweise die folgenden Schritte beinhalten, nämlich:
- ein Aussortieren jener Messwerte, die nur kürzer als eine bestimmte Zeitschwelle innerhalb eines bestimmten Bereichs lagen,
- gegebenenfalls ein Aussortieren jener Messwerte, die innerhalb oder außerhalb eines bestimmten Bereichs liegen,
- gegebenenfalls Umrechnen der gemessenen Werten auf die Entfernung zu einer Bezugsgröße wie beispielsweise der Tiefe der Produktpräsentationsvorrichtung,
- ein Einteilen der übrigen Werte in Kategorien, wobei jede Kategorie einen repräsentativen Wert, wie beispielsweise den Mittelwert oder den Median der Werte innerhalb der Kategorie aufweist,
- gegebenenfalls ein Aussortieren jener Kategorien, die nur aus wenigen Werten gebildet wurden,
- ein Bestimmen
   + der Kategorie mit dem geringsten repräsentativen Wert oder
   + von zwei Kategorien deren repräsentative Werte am nächsten beisammen liegen, und
- ein Festlegen der zu bestimmenden Abmessung
   + auf Basis des repräsentativen Werts der Kategorie mit dem geringsten Wert oder
   + auf Basis der Differenz der repräsentativen Werte der zwei Kategorien mit den am nächsten beisammen liegenden repräsentativen Werten.

In diesem beispielhaften Algorithmus werden also jene Werte, die höchstwahrscheinlich nicht einer Abmessung des Produkts entsprechen, weil sie beim Hineinstellen oder Herausnehmen des Produkts erfasst wurden, aussortiert. Auch jene Werte die eindeutig außerhalb der erwarteten Größenordnung liegen, können aussortiert werden. Weiterhin werden diese in Gruppen aus Messwerten ähnlicher Größe zusammengefasst.

Gemäß einer weiteren bevorzugten Ausbildungsform kann die Ermittlung der zumindest einen Abmessung mit Hilfe von künstlicher Intelligenz erfolgt, welche die Änderungen des repräsentativen Parameter verarbeitet bzw. bewertet.

Diese Ausbildungsform erlaubt ein dynamisches Regalmanagement, bei dem wenig oder sogar keine besonderen Handlungen vom Mitarbeiter notwendig sind, um neue Abmessungen von neuen Produkten innerhalb einer Produktpräsentationsvorrichtung zu erfassen.

Die künstliche Intelligenz kann so ausgelegt (trainiert) sein, dass sie zwischen Parameteränderungen, die auf die erwähnten Handbewegungen schließen lassen, und jenen Parameteränderungen, die zur Bestimmung der zumindest einen Abmessung verwendbar sind, unterscheiden kann. Die künstliche Intelligenz kann auch zum Empfangen eines externen Auslösers ausgebildet sein, um die zu bestimmende Abmessung zu erlernen. Auch kann die künstliche Intelligenz dahingehend trainiert sein, zu erkennen, dass sich eine Produktabmessung systematisch verändert, weil z.B. andere Produkte oder Produkte mit anderen Verpackungsabmessungen in das Regal geschlichtet werden, wodurch ein interner Auslöser für das Einlernen der neunen Abmessung gegeben ist.

Auch kann beispielsweise ein vorprogrammierter Algorithmus vorgesehen sein, der die erfassten Parameter bzw. deren Veränderung verarbeitet und sowohl auf Basis dieser Verarbeitung die Lernphase auslöst oder auch wieder stoppt und auch die zumindest eine Abmessung des Gegenstands (des Produkts) ermittelt.

Weiterhin sei angemerkt, dass bedingt durch die Produktanordnung in der Präsentationsvorrichtung, in vielen Fällen die Information über eine einzige Abmessung ausreicht, um eine optimierte Warenlogistik bzw. ein optimiertes Regalmanagement umzusetzen. Als besonders vorteilhaft hat es sich in diesem Zusammenhang erwiesen, dass die Abmessung des Produkts seine Tiefe gemessen in Richtung der Tiefe der Produktpräsentationsvorrichtung bzw. einer Ablagestruktur ist und wobei die Änderung des Parameters durch eine mit Hilfe des Sensors festgestellte Entfernungsänderung in Richtung der Tiefe der Produktpräsentationsvorrichtung bzw. der Tiefe der Ablagestruktur gegeben ist und wobei die Tiefe des Produkts mit Hilfe der festgestellten Entfernungsänderung ermittelt wird.

Für die Warenlogistik bzw. das Regalmanagement ist nämlich insbesondere die Tiefe eines Produkts gemessen in Richtung der Tiefe der Produktpräsentationsvorrichtung bzw. der Ablagestruktur von besonderer Bedeutung, weil diese Größe (wie nachfolgend erörtert) einen Rückschluss auf die Anzahl der aktuell verfügbaren wie auch maximal platzierbaren Produkte zulässt, insbesondere wenn die Produkte in einer Reihe in Richtung der Tiefe der Produktpräsentationsvorrichtung oder der Ablagestruktur positioniert sind und die zur Produktplatzierung verfügbare Tiefe bekannt ist.

Die Entfernungsänderung kann beispielsweise festgestellt werden, wenn der Sensor als Kamera ausgebildet ist und die Kamera ein Abbild eines Referenzbilds bzw. die Größe diese Referenzbilds erfasst. Bei dem Referenzbild kann es sich um ein Symbol, wie beispielsweise einen Kreis, aber auch beispielsweise um die Regalrückwand und deren Kanten handeln. Weil sich die Größe der Abbildung des Referenzbilds in Abhängigkeit vom Abstand ändert, kann aus dem erfassten Abbild auf den Abstand des Sensors zum Referenzbild geschlossen werden. Beim Referenzbild kann es sich auch um das Produkt bzw. dessen Oberfläche oder ein auf dessen Oberfläche angebrachtes Bild handeln. Es kann sich aber auch um einen 2D-Code wie beispielsweise um einen QR-Code oder einen Strichcode handeln. Auch kann vorgesehen sein, dass die Entfernungsmessung nicht oder nicht nur auf Basis der Größe der Abbildung des Referenzbildes umgesetzt wird, sondern auf Basis davon, welcher Teil bzw. welcher Anteil des Referenzbildes erfasst wird. So kann der Sensor beispielsweise wie erörtert auf einem Drücker sitzen und die Rückwand der Produktpräsentationsvorrichtung bzw. der Ablagestruktur erfassen. Die Rückwand kann nun ein Muster als Referenzbild aufweisen, das sich über einen weiten Teil der Rückwand oder über die gesamte Rückwand erstreckt, wobei das Referenzbild beispielsweise aus einem 2D-Code oder auch aus einem zum Produkt passenden Bild besteht. Anhand der Information welcher Teil des Referenzbildes von der Kamera erfasst wird, kann computerunterstützt auf die Entfernung zurückgerechnet werden.

Gemäß einer bevorzugten Ausbildungsform wird als Sensor ein auf Laufzeitmessung eines Sensorsignals basierender Sensor eingesetzt, insbesondere mit einer Auflösung im cm Bereich oder sub-cm Bereich. Die Feststellung der Entfernungsänderung erfolgt also mittels Laufzeitmessung, konkret durch Feststellung einer Änderung der Laufzeit zwischen zwei Laufzeitmessungen. Hierbei sendet der Sensor mittels eines Senders das Sensorsignal aus, das auf ein Objekt trifft und von dort reflektiert wird, und misst die Zeit, die seit dem Aussenden vergeht, bis dieses Sensorsignal wieder von einem Empfänger des Sensors empfangen wird. Auf Basis der Zeit, die das Signal benötigt, um vom Sender zu einem Gegenstand, insbesondere zum zu erfassenden Produkt, und wieder zurück zum Empfänger zu reisen, wird unter Kenntnis der Ausbreitungsgeschwindigkeit des Sensorsignals auf die Entfernung zwischen Sensor und Gegenstand geschlossen. Bei dieser bevorzugten Ausbildungsform sind Sender und Empfänger (wie auch die Verarbeitungseinrichtung zur Laufzeitbestimmung) im Sensor integriert, der Sensor also einteilig ausgeführt. Alternativ kann der Sender beim Produkt und der Empfänger an der Produktpräsentationsvorrichtung oder umgekehrt platziert sein, sodass nur die Zeit gemessen wird, die das Signal direkt vom Sender bis zum Empfänger benötigt. Hierfür muss der Sensor jedoch zweiteilig ausgeführt sein.

Darüber hinaus kann in einem Geschäft eines Einzelhändlers, wie z.B. eines Supermarkts, ein innovatives Warenbestandüberwachung-Verfahren zum Überwachen des Warenbestands in einer Produktpräsentationsvorrichtung, in der zumindest ein Produkt platzierbar ist, zum Einsatz kommen, wobei für das Produkt zumindest eine Abmessung, die für die Warenbestandüberwachung repräsentativ ist, insbesondere die Tiefe des Produkts, vorab bekannt ist.

Diese Abmessung kann auf verschiedenste Weise bei dem Einzelhändler manuell oder semimanuell ermittelt worden sein oder auch von einem Lieferanten oder Produzenten des Produkts bereitgestellt worden sein und bei dem Einzelhändler in einer digitalen Datenbank abrufbar gespeichert sein. Besonders bevorzugt wurde die Abmessung jedoch gemäß dem zuvor erörterten Verfahren bestimmt. Das Warenbestandüberwachung-Verfahren wiest nun die nachfolgend angeführten Verfahrensschritte auf, nämlich automatisches Feststellen der Änderung eines für zumindest eine Abmessung des Produkts repräsentativen Parameters, wobei der Parameter mit Hilfe eines elektronischen Sensors erfasst wird und der Sensor in der Produktpräsentationsvorrichtung lokalisiert ist, und automatisches Ermitteln einer Veränderung der Produktanzahl, wobei die Änderung des repräsentativen Parameters gegenüber der zumindest einen für die Warenbestandüberwachung repräsentativen Abmessung bewertet wird.

Der hier zur Anwendung kommende Sensor kann sich von jenem des zuvor erörterten Verfahrens unterscheiden und somit durch einen separaten zweiten Sensor realisiert sein. Bevorzugt handelt es sich jedoch um denselben Sensor, der im vorliegenden Kontext bei diesem Verfahren ebenfalls genutzt wird Es wird mit ihm bei diesem Warenbestandüberwachung-Verfahren also genauso wie beim zuvor erörterten Verfahren die automatische Feststellung der Änderung des repräsentativen Parameters durchgeführt, wobei einerseits die bereits erörterte Sensortechnologie zum Einsatz kommt und andererseits auch die in diesem Zusammenhang erörterten Maßnahmen zum Einsatz kommen.

Bei der Bewertung der Änderung des repräsentativen Parameters gegenüber der zumindest einen für die Warenbestandüberwachung repräsentativen Abmessung geht es darum, dass festgestellt wird, ob die Änderung des repräsentativen Parameters derart erfolgte, dass zuverlässig auf eine Verringerung oder Erhöhung der Produktanzahl geschlossen werden kann. Es werden also Änderungen des repräsentativen Parameters verworfen, wenn sie keinen Validen ganzzahligen Bezug zu der bekannten Abmessung haben. Natürlich können dabei auch Abweichungen innerhalb vertretbarer Grenzen berücksichtigt werden. Im Übrigen können auch hier wieder die im Zusammenhang mit für die automatische Ermittlung der zumindest einen Abmessung erörterten unterschiedlichen Ausbildungsformen beziehungsweise Maßnahmen bis hin zur künstlichen Intelligenz zum Einsatz kommen.

Ein wesentlicher Vorteil dieser automatischen Ermittlung der Veränderung der Produktanzahl, die digital an ein Warenwirtschaftssystem des Einzelhändlers kommunizier wird, liegt darin, dass ausgehend von einem initialen Warenbestand für ein bestimmtes Produkt, der ggf. von Zeit zu Zeit neu festzulegen ist, vollautomatisch in Echtzeit der tatsächliche Warenbestand im digitalen Warenwirtschaftssystem des Einzelhändlers verfügbar ist.

Gemäß einem weiteren Aspekt des Warenbestandüberwachung-Verfahren wird geprüft, ob die automatisch festgestellte Veränderung der Produktanzahl zu einer Unterschreitung eines Schwellwerts der Produktanzahl führt, wobei bei einem positiven Prüfungsergebnis ein Nachbestückungsalarm ausgelöst wird.

Mit Hilfe dieser Maßnahme lässt sich rechtzeitig der Prozess des Nachbestückens bzw. Nachschlichtens des jeweiligen Produkts im Warenwirtschaftssystem auslösen. Der Nachschlichtbedarf kann auch an dem zum Produkt gehörigen elektronischen Anzeigeschild angezeigt werden, sodass das Personal ohne weitere technische Hilfsmittel vor Ort direkt am Regal über diesen Umstand informiert werden kann. Auch kann das Warenwirtschaftssysteme bei gleichzeitig anhängigem Nachschlichtbedarf für unterschiedliche Produkte eine Priorisierung vornehmen, um das Personal effizient einzusetzen. Der Nachbestückungsalarm, wenn direkt im Sensor generiert, kann elektronisch, z.B. per Funk, von dem Sensor an das Warenwirtschaftssystem übertragen werden.

Gemäß einem weiteren Aspekt des Warenbestandüberwachung-Verfahren wird geprüft, ob eine automatisch festgestellte Veränderung der Produktanzahl zu einer Überschreitung eines Schwellwerts der Produktanzahl-Veränderung führt, wobei bei positivem Prüfungsergebnis ein Diebstahlalarm ausgelöst wird.

Mit dieser Maßnahme ist es erstmals möglich, direkt in der Produktpräsentationsvorrichtung einen potentiellen Diebstahl zu erkennen und daher auch zum Zeitpunkt der Erkennung bereits Maßnahmen einzuleiten, wie etwa die Auslösung des Diebstahlalarms direkt durch den Sensor, der als Diebstahlalarm z.B. ein akustisches Signal generieren kann und/oder den Diebstahlarm digital, z.B. per Funk, an das Warenwirtschafssystem abgeben kann.

Sowohl im Zusammenhang mit dem Nachbestückungsalarm wie auch im Zusammenhang mit dem Diebstahlalarm hat es ich als äußerst vorteilhaft erwiesen, wenn bei der Prüfung produktspezifische oder produktgruppenspezifische Schwellwerte zum Einsatz kommen. Diese individuellen Schwellwerte werden durch das Warenwirtschafsystem definiert und an die Sensoren elektronisch, z.B. per Funk, übermittelt und dort gespeichert, wo sie letztendlich dezentral zur Anwendung kommen. So hat es sich z.B. gezeigt, dass Milchprodukte üblicherweise in größeren Mengen von einer einzigen Person gekauft werden, z.B. in der Größenordnung 3 bis 20 Stück, wohingegen Rasierklingenpackungen üblicherweise nur als Einzelposten erstanden werden. Daher kann es durchaus Sinn machen, für Rasierklingenpackungen einen Schwellwert von zwei Stück zu definieren und im Gegenzug dazu für Milchprodukte gar keinen Schwelwert festzulegen, weil diese Produkte schwer zu entwenden sind und im Verhältnis zu den Rasierklingen auch recht günstig sind.

Als besonders vorteilhaft hat es sich bei dem Warenwirtschafssystem erwiesen, wenn bei einer automatischen Feststellung der Veränderung der Produktanzahl eine zusätzliche Systemkomponente aktiviert bzw. einbezogen wird, insbesondere ein Verrechnungs- bzw. Kassensystem, dem die Veränderung der Produktanzahl elektronisch mitgeteilt wird, oder ein optisches Überwachungssystem, mit dem eine digitale Aufnahme der Produktpräsentationsvorrichtung erstellt wird, bei der die Änderung der Produktanzahl festgestellt wurde.

Damit lässt sich direkt mit Hilfe des Verrechnungs- bzw. Kassensystems überprüfen, ob einerseits die Erkennung der Veränderung der Produktanzahl korrekt abläuft, und zwar auf Produktebene heruntergebrochen, und andererseits validieren, ob alle aus der Produktpräsentationsvorrichtung entnommenen Produkte einer Bezahlung zugeführt wurden. So lässt sich auf Produktebene der Schwund durch Diebstahl oder auch Verzehr direkt im Geschäft ermitteln.

Zudem lässt sich zu jeder festgestellten Veränderung der Produktanzahl mit Hilfe des optischen Überwachungssystems eine zugehörige Aufnahme erstellen oder in einer kontinuierlichen Aufnahme markieren, die den Vorgang der Entnahme oder auch der Bestückung dokumentiert. Damit lässt ich die Effizienz des Personals im Geschäfts dokumentieren und auch die Qualität des Nachbestückens überprüfen und in Folge auch verbessern, insbesondere bei Vorliegen eines Nachbestückungsalarm. Damit lässt sich jedoch auch bei Vorliegen eines Diebstahlalarms die zugehörige Aufnahme oder Aufnahmesequenz entsprechend markiere, wie z.B. mit Hilfe von Metadaten, die ein leichteres Auffinden von relevanten Aufnahmen oder auch ein Filtern in Bezug auf solche Aufnahme zulassen. Auch können diese Metadaten dazu benützt werden, um die Wahrscheinlichkeit eines Diebstahls anzuzeigen, wobei die Aufnahme oder die Sequenzen davon mit einer speziellen Farbe automatisch markiert wird, wie etwas Grün für unproblematisch, Gelb für eine möglichen Diebstahl und Rot für einen potentiell identifizierten Diebstahl. Im Zusammenhang mit dem Rasierklingenbeispiel könnte z.B. die Entnahme von drei Packungen als vermuteter (möglicher) Diebstahl eingestuft werden (gelb markiert), wohingegen die Entnahme von zehn Packungen, soweit es ich nicht um Personal des Einzelhändlers handelt, mit hoher Zuverlässigkeit als ein potentieller Diebstahl gewertet wird (rot markiert). Die so erhaltenen auf einen Diebstahl hindeutenden Aufnahmen oder Aufnahmesequenzen können digital an einen Bildschirm beim Kassenterminal übermittelt werden, wo auch die Anzahl der betroffenen Produkte angezeigt wird, was es dem Personal ermöglicht, den Vorfall mit der betreffenden Person, die auf der Aufnahme zu sehen ist, abzuklären. Auch können diese Aufnahmen bzw. Sequenzen mit zugehörigen Produktinformationen und Angaben der festgestellten Anzahl der entnommenen Produkte direkt in das Büro des Kaufhausdetektives oder an sein mobiles Kommunikationsgerät (Smartphone oder Tablet-Computer) übertragen werden, um ihn über den Vorfall zu informieren

Das interne Funkmodul des Sensors kann dazu ausgebildet sein, die Erfassungsdaten als Rohdaten oder vorverarbeitet beispielsweise über ein Wireless Local Area Network (WLAN / WIFI) oder über eine Mesh-Netzwerk-Konfiguration abzugeben. Auch können andere de-facto standardisierte Kommunikationsprotokolle wie z.B. ZigBee oder BlueTooth zur Anwendung kommen. Auch kann vorgesehen sein, dass die Sensoren mit einem 4G- oder 5G-Funkmodul ausgerüstet sind, um ihren Funkverkehr über ein (öffentliches) Mobilfunknetzwerk abzuwickeln und als IoT-Geräte zu fungieren (IoT steht hier für Internet-of-Things). Auch kann ein separates 4G- oder 5G-fähiges Funkgerät als Access-Point für die Sensoren dienen, die mit diesem Access-Point via Funk oder kabelgebunden in Verbindung stehen. Natürlich können auch andere Geräte, die zur Infrastruktur eines Warenwirtschafssystems bzw. eines Regal-Logistiksystems gehören als IoT-Hub für die Sensoren dienen. Hierfür können z.B. Kameras zum Einsatz kommen, mit deren Hilfe Regale abgefilmt werden und ggf. die voranstehend erwähnten Aufmachen oder Sequenzen von Aufnahmen erstellt werden. Diese Kameras weisen die 4G-bzw. 5G-Mobilfunkfähigkeit auf und kommunizieren mit den Sensoren gemäß einem anderen Kommunikationsprotokoll, bevorzugt funkbasiert.

Für die funkbasierte Anbindung des Sensors kann natürlich auch ein proprietäres Kommunikationsverfahren bzw. Kommunikationsprotokoll zur Anwendung kommen, wie dies z.B. aus der PCT/EP2014/053376 bekannt ist, wobei deren Offenbarung in Bezug auf das dort erörterte Zeitschlitzkommunikationsverfahren durch Bezugnahme aufgenommen ist. Im Unterschied zu dem in der PCT/EP2014/053376 offenbarten System wird hier jedoch dieses Zeitschlitzkommunikationsverfahren zur Kommunikation zwischen einem Sensor-Accesspoint und einer Gruppe diesem Sensor-Accesspoint zugeordneten Sensoren genutzt. Dieses proprietäre Kommunikationsverfahren erlaubte einen extrem energiesparenden Betrieb der Sensoren, allerdings zu Lasten der zeitlichen Verfügbarkeit der Sensoren für die Funkkommunikation. Das Funkmodul des Sensors wechselt nämlich nur sehr selten von seinem Schlafmodus in seinen Aktivmodus, um funktechnisch verfügbar zu sein. Unabhängig davon kann der Sensor seine Erfassungstätigkeit durchführen oder auch andere Funktionen ausführen. Die dabei generierten (Erfassungs-)Daten können dann im Laufe der Zeit unter Verwendung des proprietären Kommunikationsverfahrens abgegeben werden.

Abschließend sei noch ganz allgemein erwähnt, dass die erwähnten elektronischen Geräte natürliche eine Elektronik aufweisen. Die Elektronik kann diskret oder durch integrierte Elektronik oder auch eine Kombination aus beiden aufgebaut sein. Auch können Microcomputer, Micro Controller, Application Specific Integrated Circuits (ASICs), ggf. in Kombination mit analogen oder digitalen elektronischen Peripheriebausteinen zum Einsatz kommen. Funkgeräte weisen üblicherweise als Bestandteil eines Transceiver-Moduls eine Antennenkonfiguration zum Senden und Empfangen von FunkSignalen auf. Bevorzugt ist der Sensor batteriebetrieben.

Diese und weitere Aspekte der Erfindung ergeben sich durch die nachfolgend erörterten Figuren.

### Figurenkurzbeschreibung

Die Erfindung wird im Folgenden unter Hinweis auf die beigefügten Figuren anhand von Ausführungsbeispielen noch einmal näher erläutert, auf welche die Erfindung jedoch nicht beschränkt ist. Dabei sind in den verschiedenen Figuren gleiche Komponenten mit identischen Bezugszeichen versehen. Es zeigen auf schematische Weise:
Fig. 1 einen Sensor für die Verwendung in den beschriebenen Verfahren;
Fig. 2 eine Produktpräsentationsvorrichtung mit in der Produktpräsentationsvorrichtung fix positionierten Sensoren;
Fig. 3 eine Produktpräsentationsvorrichtung mit einem Sensorbewegungssystem zur vertikalen Bewegung des Sensors;
Fig. 4 eine Produktpräsentationsvorrichtung mit Produktführungsstruktur und dem Sensorbewegungssystem;
Fig. 5 eine Produktpräsentationsvorrichtung mit Produktführungsstruktur und Sensorbewegungssystem zur sowohl horizontalen wie auch vertikalen Bewegung des einzelnen Sensors;
Fig. 6 eine weitere erfindungsgemäße Produktpräsentationsvorrichtung mit Produktführungsstruktur und Sensorbewegungssystem zur horizontalen Bewegung von vertikal fix positionierten Sensoren;
Fig. 7 ein weiteres Ausführungsbeispiel des Sensorbewegungssystems;
Fig. 8 ein weiteres Ausführungsbeispiel des Sensorbewegungssystems;
Fig. 9 eine Produktpräsentationsvorrichtung mit je einem Drücker pro Produktführungsstruktur und einem einzigen beweglichen Sensor;
Fig. 10 eine Produktpräsentationsvorrichtung mit je einem Drücker pro Produktführungsstruktur und mit an den Drückern befestigten Sensoren;
Fig. 11 - 12 ein zweites Ausführungsbeispiel des Sensors;
Fig. 13 die Verwendung des Sensors gemäß dem zweiten Ausführungsbeispiel in einer Produktpräsentationsvorrichtung;
Fig. 14 - 15 eine Visualisierung zur Erörterung der prinzipiellen Funktionsweise des Sensors;
Fig. 16 ein Flussdiagramm zur Visualisierung der erörterten Verfahren.

### Beschreibung der Ausführungsbeispiele

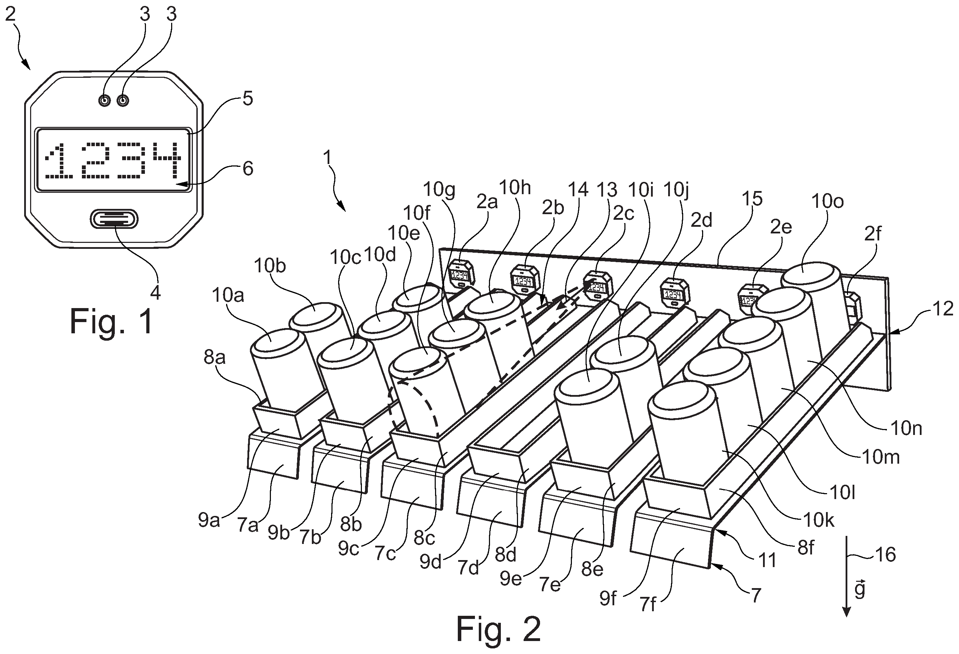

Die Figur 1 zeigt einen Sensor 2, der eine Sensoreinheiten 3 zum Aussenden eines Signals und zum Empfangen des an einem Objekt reflektierten Signals aufweist. Im vorliegenden Fall handelt es sich bei der Sensoreinheit 3 also um eine time-of-flight Sensoreinheit 3. Der Sensor 2 weist zudem einen Knopf 4 zum Betätigen durch einen Benutzer für die Vornahme von Einstellungen oder die Auslösung von Funktionen auf. Der Knopf 4 hat also die Bedeutung eines externen Auslösers. Der Sensor 2 weist zudem einen Bildschirm 5 für die Anzeige von Informationen auf.

Der Bildschirm 5 ist als energiesparendes E-Paper-Display ausgebildet und zeigt Sensoridentifikationsdaten in Form einer Sensor-ID 6 an, die einem Benutzer die Identifikation des Sensors 2 erlauben. Hierfür kann die Sensor-ID 6 beispielsweise gleich den letzten Zeichen der MAC-Adresse (Media-Access-Control-Adresse) des Sensors 2 sein oder einer andres gestalteten Identifikationsnummer entsprechen, zu der z.B. in einer Datenbank die entsprechende MAC-Adresse hinterlegt ist. Die Identifikation des Sensors 2 kann jedoch auch durch andere Maßnahmen, wie z.B. durch eine Nummer oder eine alphanumerische Zeichenfolge oder auch einen Strichcode oder einen QR-Code (QR steht hier für Quick Response) repräsentiert sein.

Die Datenbank ist mittels entsprechender Applikation am Mobiltelefon des Anwenders abrufbar. Die Applikation erlaubt auch ein Scannen des Sensors 2 (konkret des Bildschirminhalts, der Nummer oder der alphanumerischen Zeichenfolge oder des Strich- bzw. QR-Codes) mit einer Kamera des Mobiltelefons, wobei die Sensor-ID 6 mittels Bilderkennung automatisch erkannt wird, sodass ein Scannen bzw. Fotografieren als Alternative zur händischen Eingabe des Codes möglich ist, um die Daten zum Sensor und zu einem zugehörigen Produkt oder mehreren zugehörigen Produkten abzufragen. Insbesondere kann so eine Echtzeit-Lagerstandabfrage durchgeführt werden, also eine Abfrage, ob im Lager oder ob in einem anderen Regal noch das entsprechende Produkt, das dem Sensor 2 zugeordnet ist, vorhanden ist.

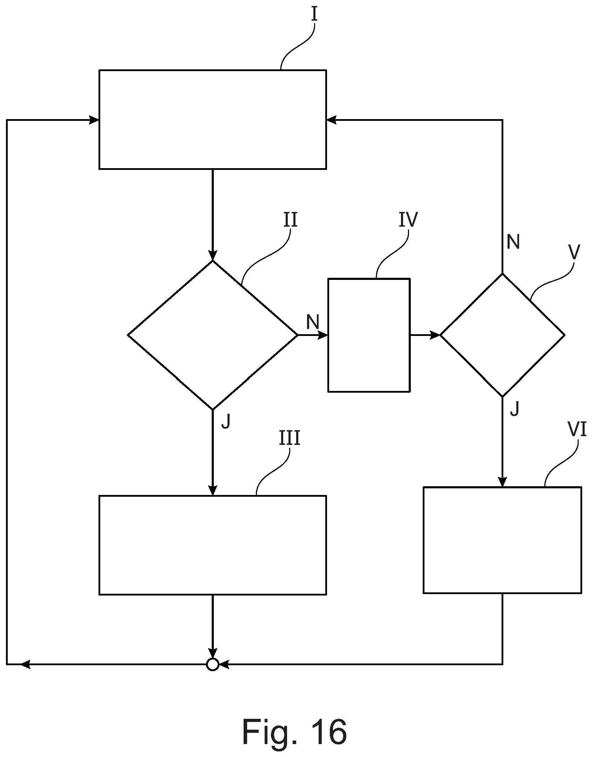

Der Sensor 2 weist hierfür ein Funkmodul (das im Gehäuse verbaut und daher nicht sichtbar ist) auf, das dem Sensor 2 eine funkbasierte Kommunikation ermöglicht. Über das Funkmodul kann der Sensor 2 also per Funk seine Ermittlungsdaten übermitteln. Ja nachdem, in welchem Modus sich der Sensor gerade befindet, repräsentieren die Ermittlungsdaten entweder die automatisch ermittelte zumindest eine Abmessung eines Produkts oder eine Veränderung der Produktanzahl, worauf in dem Flussdiagramm der Figur 16 im Detail eingegangen ist.

Wie im allgemeinen Teil der Beschreibung erörtert, kann die Funkkommunikation des Sensors 2 auf unterschiedlichste Weise erfolgen. Im hier genannten Beispiel wird von einer Funkkommunikation mit einem Access-Point ausgegangen, der seinerseits über ein kabelgebundenes Netzwerk mit einem Server verbunden ist, auf dem eine Warewirtschaftssoftware ausgeführt wird.

Der Sensor 2 erfasst mit Hilfe seiner Sensoreinheiten 3 die Anwesenheit von Gegenständen innerhalb seines Erfassungsbereichs. Die dafür nötige Signal-Datenverarbeitung erfolgt im Sensor 2 mit Hilfe einer Sensorelektronik. Die Sensorelektronik ist im Wesentlichen durch einen Mikrokontroller realisiert, auf dem eine Sensorsoftware abgearbeitet wird. Die Sensorsoftware ist so programmiert, dass damit ein Verfahren zur Bestimmung der Tiefe eines in einem Regal platzierten Produkts durchgeführt wird. Dabei erfolgt ein automatisches Feststellen der Änderung eines für die Tiefe des Produkts repräsentativen Parameters, der mit Hilfe des Sensors 2 erfasst wird. Bei der Änderung des für die Tiefe des Produkts repräsentativen Parameters handelt es sich um die Änderung des Abstands zwischen dem Sensor und einem anderen Objekt, wenn der Sensor mit dem Produkt mitbewegt wird oder zwischen dem Sensor und dem Produkt bzw. einem mit dem Produkt mitbewegten Objekt. Den Abstand stellt der Sensor mit Hilfe seiner Sensoreinheit 3 durch Laufzeitmessung des Sensorsignals und Kenntnis der Ausbreitungsgeschwindigkeit für das Sensorsignal fest. Diese Abstandsfeststellung erfolgt im Wesentlichen kontinuierlich oder quasikontinuierlich über die Zeit, also zu diskreten Zeitpunkten. Dabei überwacht der Sensor 2 die festgestellten Abstände über die Zeit hinsichtlich einer zur Tiefenbestimmung validen Änderung, so wie dies in der allgemeinen Beschreibung zu unterschiedlichen Ausbildungsformen erörtert ist. Die Sensorsoftware ermittelt also automatisch die Tiefe des Produkts basierend auf der festgestellten Änderung des Abstands.

Dieses Verfahren kann für unterschiedlichste Erfassungspositionen durchgeführt werden, so wie dies im allgemeinen Teil der Beschreibung erörtert wurde, wobei diese Erfassungspositionen angeben, von wo aus der Sensor 2 seine Erfassung durchführt Die Figuren 2 bis 11 zeigen Beispiele für fixe (orts-fixe) wie auch orts-variable Erfassungspositionen, in denen der Sensor zur Durchführung des erfindungsgemäßen Verfahrens positioniert werden kann, wie auch die nötigen Maßnahmen, die eine solche Positionierung ermöglichen.

In der Figur 2 ist ein Regal 1 mit fix positionierten Sensoren 2a-2f dargestellt. Die Sensoren 2a-2f sind an einer Rückwand 15 an fixen Erfassungspositionen befestigt.

Vor der Rückwand 15 befindet sich eine schachtförmige Ablagestruktur 7, die in sechs Abschnitte 7a-7f unterteilt ist. Die Ablagestruktur 7 bzw. jeder Abschnitt 7a-7f weist einen vorderen Rand 11 und einen hinteren Rand 12 auf. Am hinteren Rand 12 geht die Ablagestruktur 7 in die Rückwand 15 über.

In der Ablagestruktur 7 befinden sich Produkte 10a-10o. Der hintere Rand 12 der Ablagestruktur 7 ist in Richtung der Fallbeschleunigung, die durch den Pfeil 16 visualisiert ist, oberhalb des vorderen Randes 11 lokalisiert. Der Boden der Ablagestruktur 7 ist so glatt ausgebildet, dass darauf abgelegte Gegenstände 10a-12o automatisch hin zum vorderen Rand 11 gleiten.

Jeder Abschnitt 7a-7f weist eine Produktführungsstruktur 8a-8f auf. Diese Produktführungsstruktur 8a-8f führt die Gegenstände 10a-10o innerhalb eines Abschnittes 7a-7f jeweils in einer Linie, also entlang einer Anordnungslinie.

Die Produktführungsstruktur 8a-8f weist für jeden Abschnitt 7a-7f jeweils eine vordere Begrenzung 9a-9f auf, um ein Herausfallen der Gegenstände 10a-10o beim vorderen Rand 11 zu vermeiden. Die Begrenzung 9a-9f ist hierbei so niedrig ausgebildet, dass insbesondere die vordersten Gegenstände 10a, 10c, 10f, 10i und 10k gut einsehbar und nach leichtem Anheben einfach herausnehmbar sind. Wird einer dieser vordersten Gegenstände 10a, 10c, 10f, 10i und 10k herausgenommen rutscht der jeweils dahinter befindliche Gegenstand nach, also hin zur Begrenzung 9a-9f.

Jedem der Abschnitte 7a-7f ist jeweils ein Sensor 2a-2f zugeordnet. Jeder Sensor 2a-2f weist eine Erfassungsrichtung 13 auf, die sich vom jeweiligen Sensor 2a-2f zu den jeweiligen Gegenständen 10a-10o in jeweils einem Abschnitt 7a-7f erstreckt. Exemplarisch ist die Erfassungsrichtung für den Sensor 2c als Pfeil eingezeichnet. Die Erfassungsrichtung 13 des Sensors 2c zeigt also in Richtung der Gegenstände 10f-10h, die sich im zum Sensor 2c gehörigen Abschnitt 7c befinden.

Um die Erfassungsrichtung 13 herum öffnet sich ausgehend vom jeweiligen Sensor 2a-2f ein kegelförmiger Erfassungsbereich 14 mit einem relativ geringen Öffnungswinkel (geringe Weite des Öffnungswinkels), wobei der Öffnungswinkel so gering ist, dass sich der Erfassungsbereich 14 über die Entfernung vom hinteren Rand hin bis zum vorderen Rand auf eine einzige Produktführungsstruktur 8a-8f beschränkt. Dieser Erfassungsbereich 14 ist ebenfalls exemplarisch für den Sensor 2c eingezeichnet. Die anderen Sensoren weisen also ebenfalls jeweils eine Erfassungsrichtung 13 und einen Erfassungsbereich 14 auf.

In diesem Ausführungsbeispiel überprüft bzw. überwacht jeder Sensor 2a-2f jeweils eine Gruppe von Gegenständen 10a-10o, die lückenlos in einer Linie von der Begrenzung 9a-9f hin zum Sensor 2a-2f angeordnet sind. Jeder Sensor 2a-2f kann so einen Abstand erfassen bzw. messen und bei einer festgestellten Änderung des Abstands automatisch die Tiefe des dort platzierten Produkts ermitteln. Die als Ergebnis dieser Ermittlung vom Sensor 2a-2f generierten Ermittlungsdaten, welche die ermittelte Produkt-Tiefe repräsentieren bzw. angeben, können vom Sensor 2a-2f selbst oder von einem Warenwirtschaftssystem oder auch beispielsweise einem mobilen Gerät (nicht dargestellt) ausgewertet bzw. weiter verarbeitet werden, so wie dies im allgemeinen Teil der Beschreibung erörtert ist.

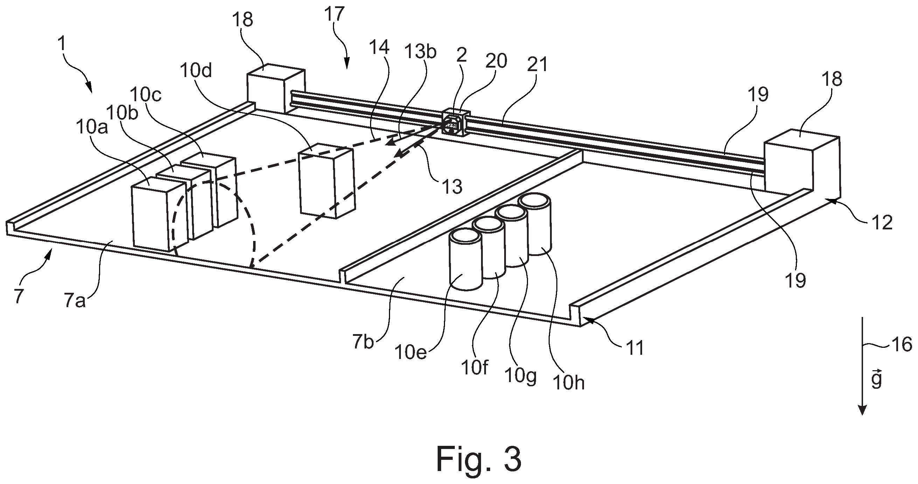

Die Figur 3 zeigt ein Ausführungsbeispiel eines Regals 1 ohne Produktführungsstruktur 8a-8f. In diesem Ausführungsbeispiel wurde auch auf die Rückwand 15 verzichtet, um Platz für ein Sensorbewegungssystem 17 zu schaffen. Nichtsdestotrotz kann sich hinter dem Sensorbewegungssystem 17 eine Wand erstrecken, um z.B. zwei Regalseiten voneinander zu trennen oder ein Regal 1 strukturell zu begrenzen.

Das Sensorbewegungssystem 17 weist zwei Antriebseinheiten 18 auf, die mit zwei Schienen 19 verbunden sind. Auf den Schienen 19 ist ein Schlitten 20 montiert, der entlang der Schienen 19 verschiebbar ist. Auf dem Schlitten 20 ist der Sensor 2 befestigt. Der Schlitten 20 ist mit einem Riemen 21 verbunden. Die Antriebseinheiten 18 sind dazu ausgebildet, den Riemen 21 über zumindest eine angetriebene Riemenscheibe im Inneren mindestens einer Antriebseinheit 18 zu ziehen und so den Schlitten 20 und den Sensor 2 entlang des hinteren Randes 12 zu verschieben. Die Bewegung des Sensors 2 wird mit einer nicht weiter dargestellten elektronischen Steuerung, welche die Antriebseinheiten 18 elektronisch ansteuert, veranlasst.

Das Sensorbewegungssystem 17 ist also dazu ausgebildet, den Sensor 2 in Bezug zur Fallbeschleunigung, dargestellt durch den Pfeil 16, horizontal zu verschieben und zu positionieren und ermöglicht somit eine orts-variable Erfassungsposition für den Sensor 2.

Vor dem Sensorbewegungssystem 17 befindet sich die Ablagestruktur 7, die in zwei Abschnitte 2a, 2b unterteilt ist. Die Ablagestruktur 7, bzw. jeder Abschnitt 7a,7b weist den vorderen Rand 11 und den hinteren Rand 12 auf. Beim hinteren Rand 12 befindet sich das Sensorbewegungssystem 17.

Auf der Ablagestruktur 7 befinden sich auch hier Produkte 10a-10h.

Der hintere Rand 12 der Ablagestruktur 7 ist in diesem Ausführungsbeispiel bezogen auf die Richtung der Fallbeschleunigung (dargestellt durch den Pfeil 16) in einer Ebene mit dem vorderen Rand 11 ausgerichtet. Im Unterschied zum vorangehend erörterten Ausführungsbeispiel gleiten die Gegenstände 10a-10f also nicht zufolge der Fallbeschleunigung zum vorderen Rand 11, sondern verharren in ihrer jeweiligen Position, bis sie manuell bewegt werden.

Die Erfassungsrichtung 13 des Sensors 2 verläuft parallel zur Fläche der Ablagestruktur 7 und zeigt vom Sensor 2 zum vorderen Rand 11. Es ist aber auch möglich, dass der Sensor 2 dazu ausgebildet ist, die Erfassungsrichtung 13 zu verändern, sodass diese nicht normal auf die Bewegungsrichtung des Sensors 2 stehen muss.

Der Erfassungsbereich 14 erstreckt sich auch hier kegelförmig um die Erfassungsrichtung 13. Bewegt das Sensorbewegungssystem 17 den Sensor 2 entlang des hinteren Randes 12, kann dieser mehrere Bereiche erfassen, wobei nach anschließender Auswertung der Erfassungsergebnisse Rückschlüsse auf die Anzahl der Gegenstände in den jeweiligen Abschnitten, wo jeweils eine Produktgruppe platziert ist, gemacht werden können.

Auch hier kann durch Überwachung der Änderung des mit Hilfe des Sensors automatisch bestimmten Abstands zwischen dem Sensor und der jeweiligen Produktgruppe vom Sensor selbst die Tiefe des jeweiligen Produkts ermittelt werden. Dabei wird hier davon ausgegangen, dass diese Änderungen immer dann auftreten, wenn z.B. Personal von vorne her Produkte nachschlichten und die am weitesten hinten liegenden Produkte nach hinten hin in Richtung des Sensors geschoben werden.

Auch kann zur Ermittlung der Tiefe der Produkte das Sensorbewegungssystem nicht hinter den Produkten sondern seitlich davon angeordnet sein. Auch können gemäß einem weiteren Ausführungsbespiel zwei solche Sensorbewegungssysteme an den erwähnten Seiten, also einerseits hinter den Produkten und andererseits seitlich der Produkte, vorgesehen sein, so dass die Erfassung von zwei unterschiedlichen Seiten aus dynamischen, also aus zwei ortsvariablen Erfassungspositionen heraus erfolgen kann, was die automatische Ermittlung der Abmessungen erleichtert, ggf. auch verbessert.

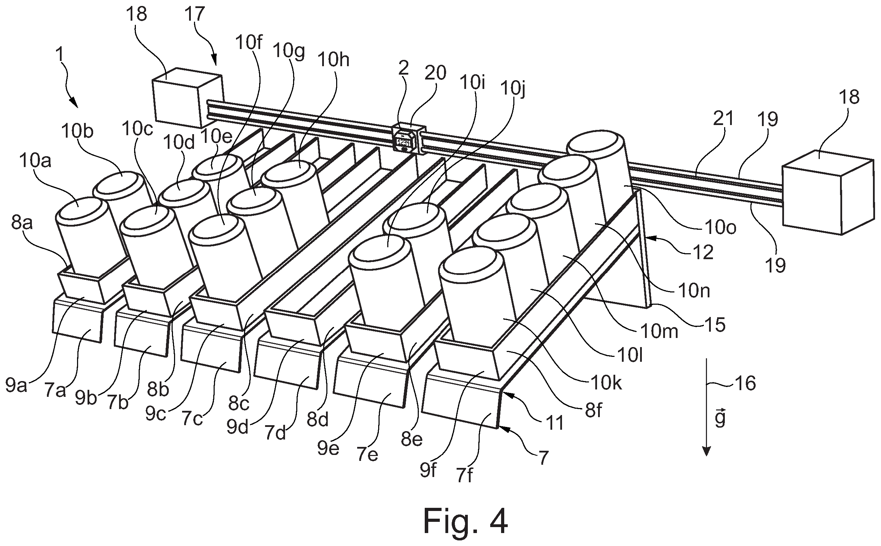

Weiterhin kann die Genauigkeit der Abschätzung der Anzahl der Gegenstände 10a-10h verbessert werden und auch die Ermittlung der Tiefe der Produkte pro Produktgruppe beschleunigt werden, wenn wie im Zusammenhang mit der Figur 2 erörtert, eine Produktführungsstruktur 8a-8f vorgesehen ist. Ein Ausführungsbeispiel, das eine Kombination der Produktführungsstruktur 8a-8f und des Sensorbewegungssystems 17 aufweist, ist in der Figur 4 dargestellt.

Vor dem Sensorbewegungssystem 17 befindet sich die Ablagestruktur 7. Oberhalb des hinteren Randes 12 fehlt die in der Figur 2 dort sichtbare Rückwand 15, um dem Sensor 2 die ungestörte Erfassung der Gegenstände 10a-10o, die sich in der Ablagestruktur 7 befinden, zu ermöglichen.

Die Ablagestruktur 7, die unterhalb des hinteren Rands 12 der Ablagestruktur 7 verlaufende Rückwand 15 und die Antriebseinheiten 18 können fix mit einer nicht dargestellten Trägerstruktur, wie beispielsweise ein Stabwerk oder andere ebene Blechteile bzw. Wände, verbunden sein.

Auch hier ist der Sensor 2 so orientiert, dass seine nicht im Detail dargestellte Erfassungsrichtung 13 vom Sensor 2 hin zum vorderen Rand 11 zeigt und parallel zur Ebene zur Erstreckung der jeweiligen Abschnitte 7a-7f verläuft.

Das Sensorbewegungssystem 17, insbesondere die erwähnte Steuerung, ist dazu ausgebildet, den Sensor 2 in diskrete Positionen zu bewegen. Diese diskreten Positionen sind hier jene, in denen die Erfassungsrichtung und die Linie, in der die Gegenstände 10a-10o positioniert sind, zusammenfallen. So kann die Erfassung des Sensors 2 genau auf die jeweiligen Abschnitte 7a-7f fokussiert werden und unnötige Zwischenpositionserfassungen vermieden werden.

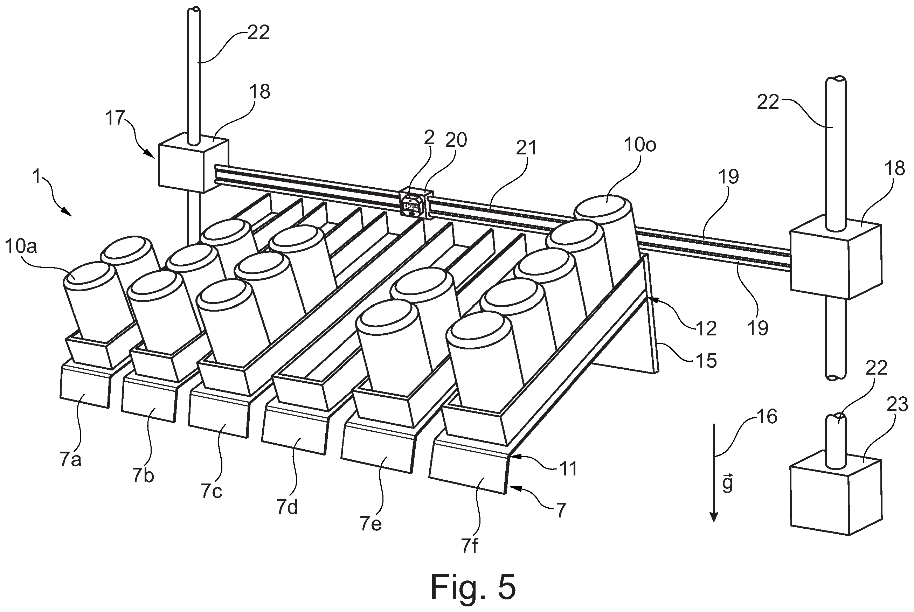

In der Figur 5 ist ein weiteres Ausführungsbeispiel der Produktpräsentationsvorrichtung 1 dargestellt, wobei der Sensor 2 nicht nur horizontal, sondern auch vertikal bewegbar ist. Dies ermöglicht es, den Sensor entlang zweier Freiheitsgrade an orts-variablen Erfassungspositionen zu positionieren, also im Wesentlichen flächenhaft zu bewegen, insbesondere regaletagen-übergreifend zu bewegen.

Im vorliegenden Fall hat das Regal 1 mehrere Ablagestrukturen 7 (Regalebenen), die übereinander angeordnet sind, wobei jedoch nur eine einzige aus Gründen der Übersichtlichkeit dargestellt ist. Auch wurde im Sinne der Übersichtlichkeit die Anzahl der Bezugszeichen reduziert.

Jede der beiden Antriebseinheiten 18 ist im Unterschied zur Figur 4 hier jedoch vertikal bewegbar und umschließt mit einem Innengewinde jeweils eine Gewindestange 22. Jede Gewindestange 22 wird jeweils von einer Gewindestangenantriebseinheit 23 angetrieben. Die Gewindestangenantriebseinheit 23 ist fix mit der auch hier nicht dargestellten Trägerstruktur verbunden. Sie ist also relativ zur Rückwand 15 fix.

Das Sensorbewegungssystem 17 bzw. dessen Gewindestangenantriebseinheit 23 kann gesteuert durch die elektronische Steuerung den Sensor 2 nicht nur entlang des hinteren Randes 12 der dargestellten Ablagestruktur 7 bewegen, sondern ihn auch in Ebenen oberhalb oder unterhalb der dargestellten Ablagestruktur 7 bewegen. Der Sensor 2 kann also nicht nur mehrere Abschnitte 7a-7f einer Ablagestruktur 7, sondern auch mehrere Ablagestrukturen 7, also ein ganzes Regal erfassen.

Gemäß dieser Ausführungsform kann mit nur einem einzigen Sensor 2 die Tiefe der unterschiedlichen Produkte eines ganzen Regals 1 ermittelt werden.

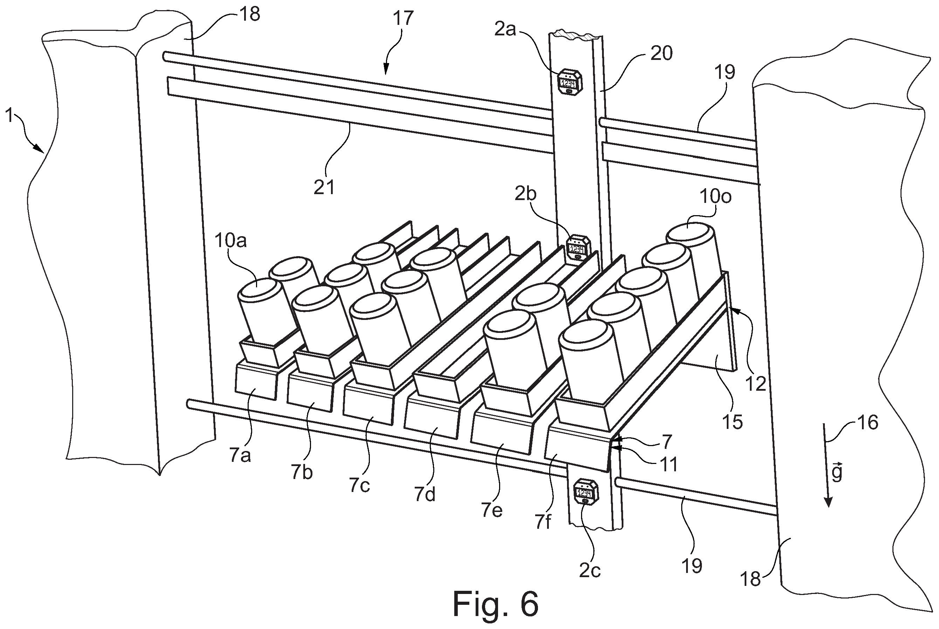

Die Figur 6 zeigt ein weiteres Ausführungsbeispiel eines Sensorbewegungssystems 17 zum Erfassen mehrerer übereinander angeordneter Ablagestrukturen 7. Dafür sind hier mehrere Sensoren 2a-2c auf einem Schlitten 20 vorgesehen, wobei jeder Sensor 2a-2c jeweils einer Ablagestruktur 7 zugeordnet ist. Der Schlitten 20 fährt auf den beiden Schienen 19 entlang des hinteren Randes 12 der Ablagestrukturen 7. Die Antriebseinheiten 18 sind hier, wie auch die Rückwand 15, fix mit der Trägerstruktur verbunden. Die Antriebseinheiten 18 sind dazu ausgebildet, den Schlitten 20 über den Riemen 21 zu bewegen. Der mittlere Sensor 2b ist hierbei der dargestellten Ablagestruktur 7 zugeordnet, was sich durch seine horizontale Verortung ergibt. Der obere Sensor 2a und der untere Sensor 2c sind hier jeweils nicht dargestellten anderen Ablagestrukturen 7 zugeordnet, was sich durch ihre individuelle horizontale Verortung ergibt.

Fährt der Schlitten 20 horizontal entlang der Ablagestrukturen 7, erfasst jeder Sensor die Gegenstände 10a-10o in den jeweiligen Ablagestrukturen 7.

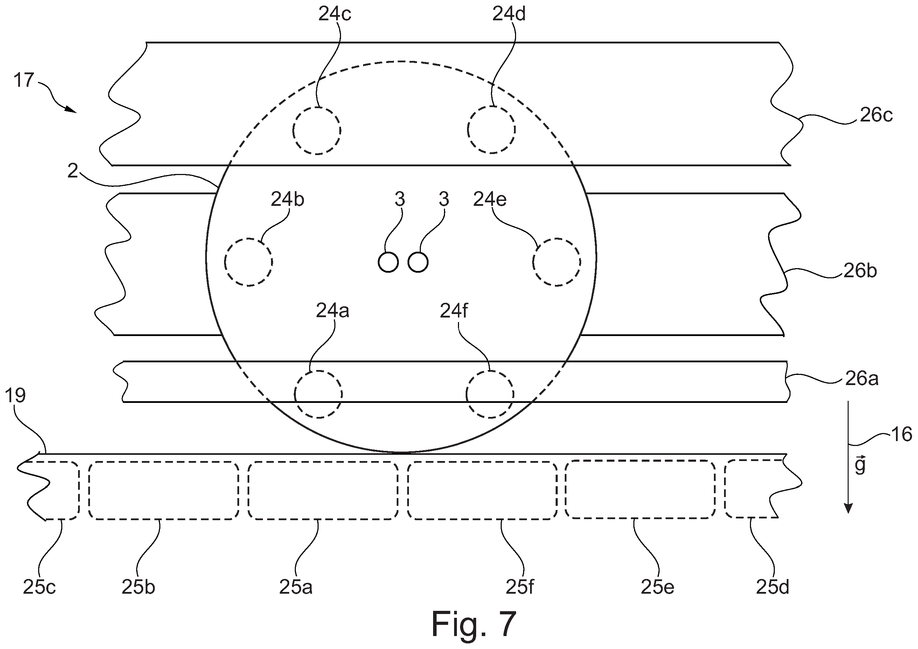

In der Figur 7 ist ein sehr platzsparendes Ausführungsbeispiel für das Sensorbewegungssystem 17 bzw. für den Sensor 2 dargestellt. Der Sensor 2 ist als zylindrisches Antriebsrad ausgeführt. Die Sensoreinheiten 3 sind nahe bei der Mitte des Sensors 2 angeordnet. Der Sensor 2 befindet sich auf einer Schiene 19 und ist dazu ausgebildet, auf dieser abzurollen. Das Sensorbewegungssystem 17 weist weiterhin drei Leisten 26a, 26b und 26c auf, die dazu ausgebildet sind, den Sensor 2 auf der Schiene 19 zu halten. Zu diesem Zweck befindet sich die untere Leiste 26a und die obere Leiste 26 c auf jener Seite des Sensors 2, auf dem sich der Erfassungsbereich 14 befindet, während die mittlere Leiste 26b sich auf der anderen Seite befindet. So ist es ausgeschlossen, dass der Sensor 2 von der Schiene 19 herunterfällt.

Der Sensor 2 weist sechs erste Magnetelemente 24a-24f auf, bei denen es sich um Permanentmagnete handelt.

Die Schiene 19 weist über die gesamte Länge hinweg eine Vielzahl an zweiten Magnetelementen 25a-25f auf, bei denen es sich um individuell ein- und ausschaltbare Elektromagnete handelt.

In der dargestellten Position sind die beiden mittleren zweiten Magnetelemente 25a und 25f so geschaltet, dass sie die entsprechenden ersten Magnetelemente 24a und 24f zu sich hinziehen.

Um den Sensor 2 weiter nach rechts zu bewegen, also im Uhrzeigersinn zu drehen, wird der linke der beiden aktiven zweiten Magnetelemente 25a deaktiviert und das nächste rechte zweite Magnetelement 25e aktiviert, sodass das entsprechende erste Magnetelement 24e nach unten zur Schiene 19 gezogen wird. Zusätzlich kann gleichzeitig das zuvor aktive zweite Magnetelement 25a umgepolt aktiviert werden, um das korrespondierende erste Magnetelement 24a von der Schiene 19 weg zu drücken.

Alternativ kann das erste Magnetelement 24a-24f als ferromagnetisches Magnetelement ausgebildet sein.

Auch können die ersten Magnetelementen 24a-24f schaltbare Elektromagnete sein. Entsprechend kann es sich bei den zweiten Magnetelementen 25a-25b um Permanentmagnete oder um ferromagnetische Magnetelemente handeln. Auch kann die Schiene 19 aus einem entsprechenden Material gefertigt sein.

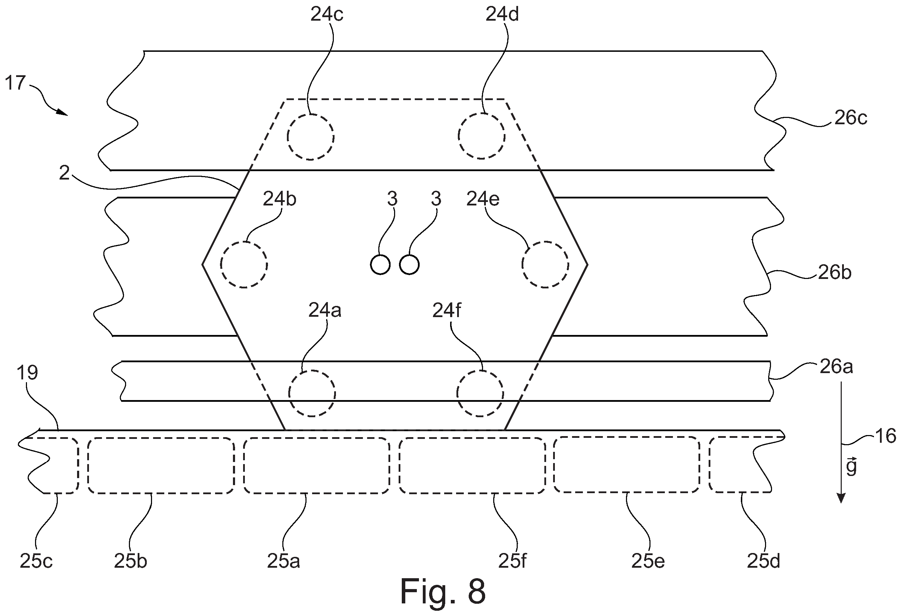

In der Figur 8 ist ein weiteres Ausführungsbeispiel zu sehen, wobei im Unterschied zum in der Figur 7 gezeigten Ausführungsbeispiel das Antriebsrad polygonförmig ist. Das bedeutet, dass jene Flächen, auf denen der Sensor 2 in stabilen Lagen steht, im Querschnitt normal auf diese Flächen im Wesentlichen ein konvexes Polygon bilden.

Dies gibt dem Sensor 2 auch bei nicht aktivierten Elektromagneten einen sicheren Halt an einer gewünschten Position.

Weiterhin ist so der Sensor 2 in bestimmte, diskrete Positionen positionierbar. Die Aufteilung der Ablagestruktur 7 lässt sich also an die Abmessungen des Sensors 2 so anpassen, dass der Sensor 2 jeweils in den gewünschten diskreten Positionen platzierbar ist.

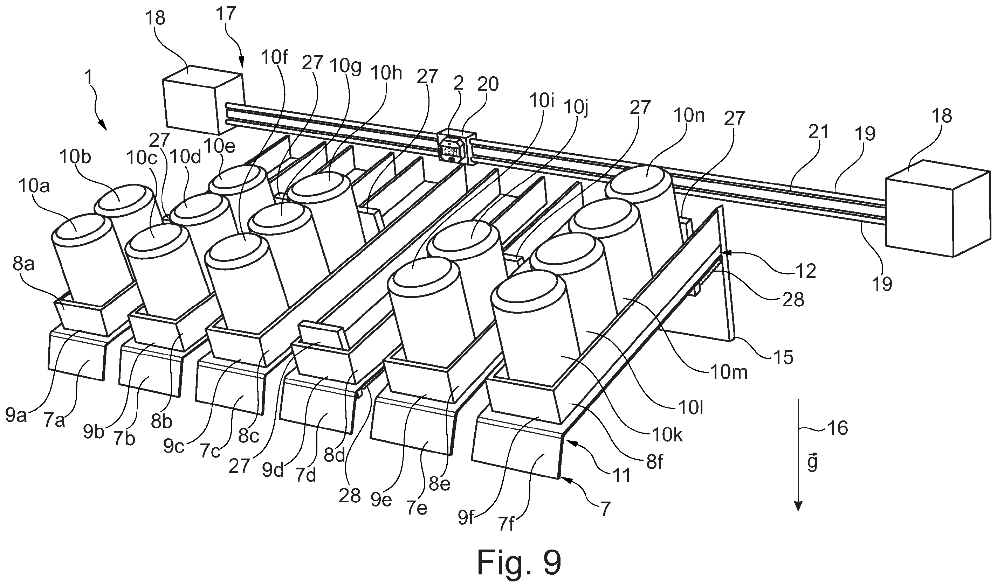

In der Figur 9 ist ein weiteres Ausführungsbeispiel des Regals 1 zu sehen, das weitgehend jenem in der Figur 4 gleicht. Im Unterschied zur der Figur 4 weist die Produktführungsstruktur 8a-8f hier jedoch plattenförmige Drücker 27 auf, die dazu vorgesehen sind, Produkte 10a-10n, die in der Ablagestruktur 7 bzw. deren schachtförmigen Abschnitten 7a-7f platziert sind, zum vorderen Rand 11 zu drücken. Hierfür ist jeder Drücker 27 jeweils mit einem Federelement 28 verbunden, das den jeweiligen Drücker 27 von der Rückwand 15 wegdrückt bzw. zum vorderen Rand 11 hindrückt.

Im Unterschied zur Figur 4 erfasst der Sensor 2 hier nicht unmittelbar den Abstand zwischen dem Sensor 2 und dem Produkt 10a-10n, sondern direkt den Abstand zwischen dem Sensor 2 und dem Drücker 27. Dies macht jedoch bei der automatischen Ermittlung der Tiefe des Produkts keinen Unterscheid, weil sich der Drücker ja auch nur gemäß des durch die Tiefe des Produkts vorgegebenen Abstand-Rasters oder gemäß einem Vielfachen davon bewegen kann, wenn ein Produkt oder mehrere Produkte einer Produktgruppe entnommen oder nachgeschlichtet werden.

An dieser Stelle sei noch erwähnt, dass die Abschnitte 7a-7f nicht separiert voneinander vorliegen müsse. Vielmehr können sie auch als zusammenhängende Ebene bzw. Baugruppe ausgeführt sein.

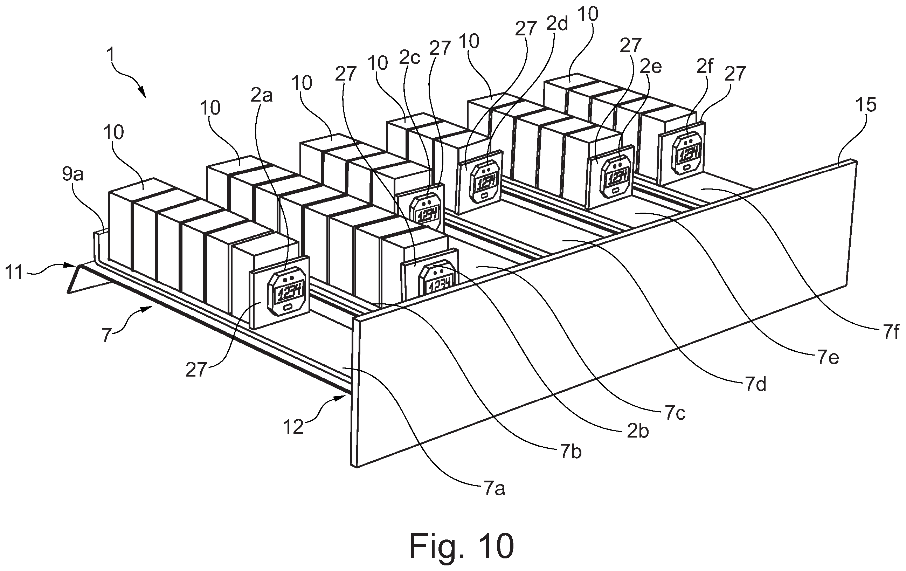

Die Figur 10 zeigt ein im Vergleich zu der Figur 9 ähnliches Ausführungsbeispiel, wobei hier jedoch jeder Drücker 27 mit einem Sensor 2 (2a - 2f) ausgestattet ist und die Erfassungsrichtung des jeweiligen Sensors 2a - 2f weg vom Drücker und hin zum hinteren Rand der Ablagestruktur (Regalbodens) orientiert ist, wo der Regalboden mit einer Rückwand 15 abgeschlossen ist. Hier wird also der Sensor 2 entsprechend der Anzahl der entnommenen oder nachgeschlichteten Produkte relativ zu der Rückwand 15, die eine Referenz bildet, bewegt und aus der Änderung seines Abstands zu dieser Referenz die Tiefe des jeweiligen Produkts ermittelt.

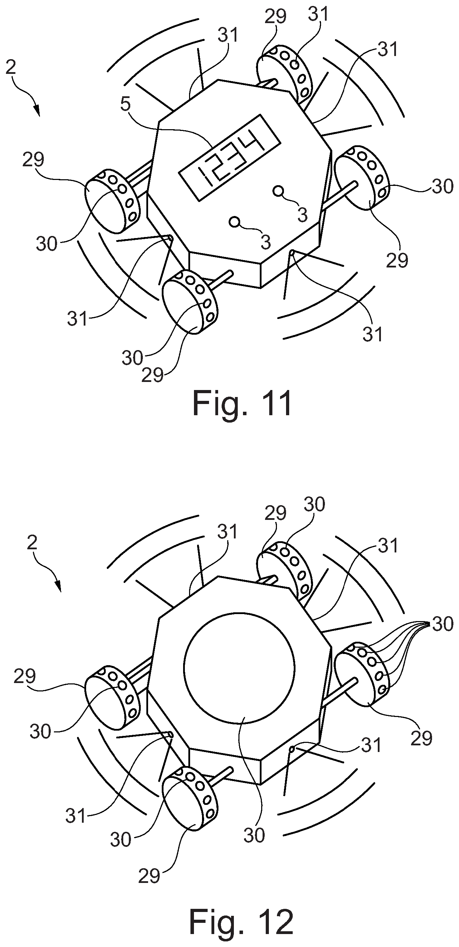

Die Figuren 11 und 12 zeigen einen zum autonomen Manövrieren in der Produktpräsentationsvorrichtung ausgebildeten, also selbstfahrenden Sensor 2 als Sensorvehikel, der einen elektrischen Antrieb aufweist, von dem vier Räder 29 sichtbar sind, wobei zwei der Räder 29 lenkbar sind, um Richtungsänderungen zu vollführen.

Der Sensor 2 weist rückenseitig, wie in der Figur 11 zu sehen, die Sensoreinheiten 3 und den Bildschirm 5 auf. Weiterhin weist der Sensor 2 bauchseitig, wie in der Figur 12 zu sehen, in seinem Gehäuse integriert einen Permanentmagnet 30 auf, der als Kreis schematisch angedeutet ist. Auch zeigt die Figur 12, dass umfangsseitig in den Rädern 29 ebenfalls Permanentmagnete 30 angeordnet sein können. Der Antrieb bzw. die Positionierung des Permanentmagneten 30 sind hierbei so dimensioniert, dass der Permanentmagnet 30 nicht direkt an dem Regal 1 anliegt, sondern ein Luftspalt zum Regal 1 hin frei bleibt.

An seinen Seitenwänden weist der Sensor 2 Navigationssensoren 31 auf, die es seiner Sensorelektronik, die im Gehäuse aufgenommen ist und welche die Bewegung des Sensors 2 steuert, erlauben, sich bei der autonomen Bewegung innerhalb der Produktpräsentationsvorrichtung zu orientieren, Hindernisse zu erkennen und zu umfahren oder auch Strukturen zu erkenne und diese zu einem späteren Zeitpunkt wieder zu erkennen und ggf. zur Navigation zu nutzen.

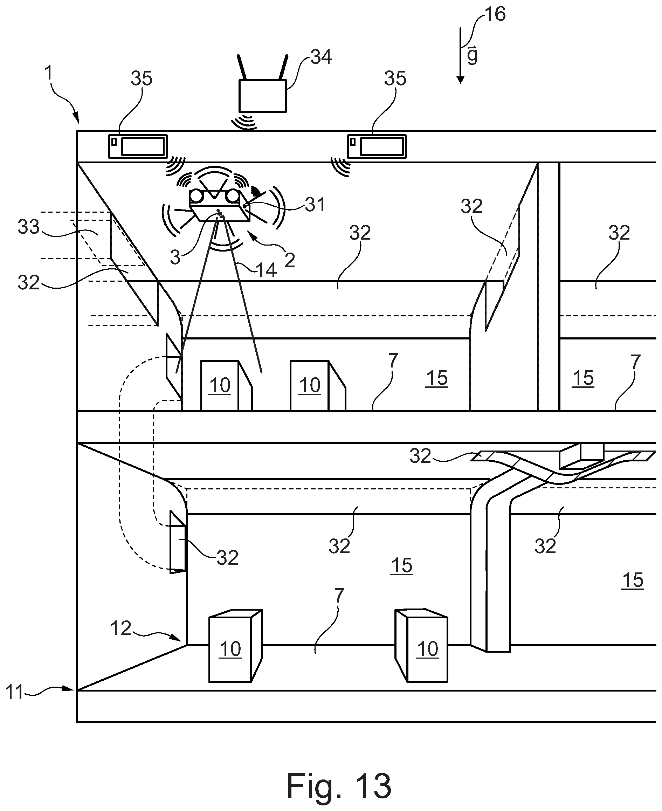

Wie in der Figur 13 dargestellt, erlaubt der Permanentmagnet 30 (oder auch die Permanentmagnete 30 der Räder29) es dem Sensor 2 sich an einem ferromagnetischen Strukturelement (z.B. Ablagestruktur 7), wie etwa einem aus Stahlbleck gefertigten Regalboden oder an einer z.B. vertikal verlaufenden Rückwand 15 einer Regaleben, des Regals 1 zu halten bzw. sich dort anzuhaften. Diese Fähigkeit wird insbesondere derart genutzt, dass sich der Sensor 2 magnetisch gehalten in dem Regal 1 kopfüber, also Rückenseitig nach unten schauend an der Unterseite eines Regalbodens 7, autonom bewegen kann und von dort aus einer ortsvariablen Erfassungsposition heraus seine Erfassung der unter ihm angeordneten Produkte 10 durchzuführen, um die Abmessungen, wie insbesondere die Tiefe, der Produkte 10 oder auch die Breite und die Höhe zu ermitteln.

Weiterhin ist dort zu sehen, dass der Sensor unter Ausnutzung von Verbindungselementen 32, welche die Strukturelemente des Regals 1 miteinander in für den Sensor 2 befahrbarer Weise verbinden, zwischen den Strukturelementen, ja sogar zwischen den Regalen 1, übersetzen kann. Auch kann der Sensor 2, der ja batteriebetrieben ist, eine Ladestation 33 ansteuern, wo er seinen Batteriespeicher induktiv aufladen kann.

In der Figur 13 ist weiterhin ein für eine Kommunikationsinfrastruktur typischer Access-Point 34 zu sehen, der einerseits zur Funkkommunikation mit dem Sensor 2 und/oder andererseits auch zur Funkkommunikation mit elektronischen Etiketten (ESL) 35 vorgesehen und ausgebildet ist, wobei die ESLs 35 zur Anzeige von Produkt-und/oder Preisinformation an den Regalschienen des Regals 1 angebracht sind. Die ESLs 35 können auch NFC-fähig ausgebildet sein (NFC steht für Near Field Communication). Gleiches gilt für den Sensor 2, so dass die ESLs 35 als funktechnische Leuchtfeuer für den Sensor 2 dienen können, wenn er sich in unmittelbarer Nähe (also innerhalb des NFC-Funkbereichs von max. einigen Zentimetern) zu den ESLs 35 befindet.

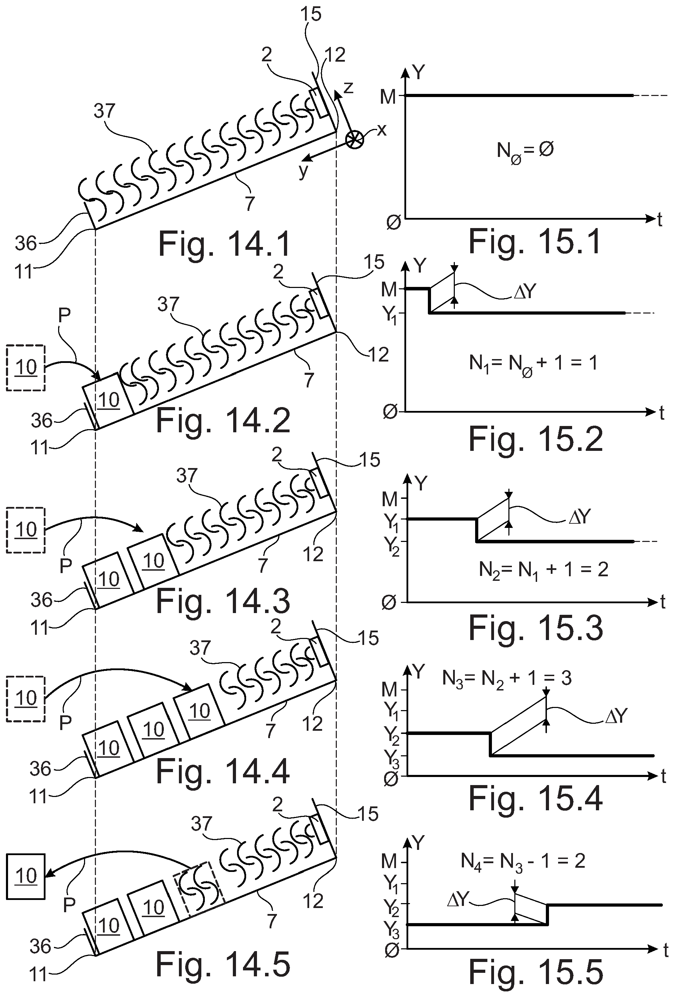

Mit Hilfe der Figuren 14, 15 und 16 ist das Funktionsprinzip des Sensors 2 visualisiert.

Im Detail zeigen die jeweils zugehörigen Paare der Abbildungen Figur 14.1 und Figur 15.1 bis hin zu Figur 14.5 und Figur 15.5 einerseits ein Regal 1, das mit Produkten 10 bestückt wird bzw. von dem ein Produkt 10 entnommen wird (Figuren 14.1 bis 14.5), und andererseits die dabei vom Sensor 2 aus festgestellten Entfernungen zu dem Produkt 10 (Figuren 15.1 bis 15.5). In der Figur 16 ist ein vom Sensor 2 bereitgestellter Verfahrensablauf eines Verfahrens in Form eines Flussdiagramms visualisiert.

In der Figur 14.1 ist ein Ausschnitt eines Regals 1, im Detail der Regalboden 7, sowie eine den Regalboden 7 an seiner linken unteren Seite (vorderen Rand 11 des Regals 1) abschließende Regalschiene 36 aus einer seitlichen Perspektive dargestellt. Der Regalboden 7 ist an seinem hinteren Rand 12 mit der Rückwand 15 abgeschlossen, an welcher der Sensor 2 mit Erfassungsrichtung 14 hin zum vorderen Rand 11 befestigt ist. Weiterhin ist ein kartesisches Koordinatensystem zur Identifikation der Richtungen abgebildet. Im vorliegenden Fall (in diesem vereinfachten Beispiel) ist die Richtung der y-Koordinate vom hinteren Rand 11 zum vorderen Rand 12 hin orientiert und beschreibt den Abstand zwischen Produkten 10 und dem Sensor 2. Weiterhin ist das Sensorsignal 37 schematisiert dargestellt, wobei es vom Sensor 2 ausgesandt wird und an der Regalschiene 36 retour zum Sensor 2 reflektiert wird. Der Sensor 2 erfasst daher den maximalen Abstand M, welcher der Tiefe des Regalbodens 7 entspricht. Der vom Sensor 2 erfasste Wert der Tiefe ist in der Figur 15.1 über der Zeit dargestellt und ändert sich erst, wenn ein Produkt 10 am Regalboden 7 abgelegt wird, sowie dies in der Figur 14.2 mit Hilfe des Pfeiles P visualisiert ist. Der Sensor 2 erfasst also einen kürzeren Abstand als zuvor, wobei der zeitliche Verlauf des Abstands in der Figur 15.2 dargestellt ist. Die im zeitlichen Verlauft auftretende Abstandsänderung, die zum Zeitpunkt des Nachschlichtens des Produktes 10 eintritt, ist in der Figur 15.2 als Δy eingetragen. In den weiteren Figuren 14.3 bis 15.4 ist das Nachschlichten von weiteren zwei Produkten 10 visualisiert, wobei in Analogie zu Figur 15.2 zwei weitere Abstandsänderungen Δy hin zu einem geringeren Abstand auftreten. Der Sensor 2 kann grundsätzlich schon bei Auftreten der ersten weitere Abstandsänderungen Δy feststellen, dass diese Abstandsänderungen Δy die Produkttiefe definiert. Er kann jedoch auch aus dem mehrfachen sequenziellen Auftreten dieser Abstandsänderungen Δy die Produkttiefe definieren. Sobald der Sensor 2 eine Produkttiefe definiert hat, kann er auf Grund der Anzahl der aufgetretenen Abstandsänderungen feststellen, wie viele Produkte 10 auf dem Regalboden 7 nachgeschlichtet wurden (siehe Figurensequenz 14.2 bis 15.4) oder wie viele Produkte 10 von dem Regalboden 7 entnommen wurden (siehe Figurenpaar 14.5 und 15.5). Die im Regal 1 festgestellte Anzahl der Produkte ist in der Figurensequenz 15.1 bis 15.5 durch das Symbol N bzw. die dort angeführte Gleichung angegeben.

Das in der Figur 16 dargestellte Verfahren, das mit Hilfe der Elektronik des Sensors 2 bereitgestellt wird, ist hier auf die makroskopischen Verfahrensschritte heruntergebrochen dargestellt. Die Darstellung der Figur 16 visualisiert eine Kombination aus dem Verfahren zur Bestimmung einer Abmessung eines in der Produktpräsentationsvorrichtung 1 befindlichen Produkts 10 und einem Warenbestandüberwachung-Verfahren.

Das Verfahren beginnt in einem Block I, in dem ein automatisches Erfassen der Änderung zumindest eines für die Abmessung des Produkts repräsentativen Parameters festgestellt wird. Im Kontext der zuvor beschriebenen Figuren 14.1 bis 15.5 ist dies die Abstandsänderungen Δy, die mit Hilfe des in dem Regal 1 lokalisierten Sensors 2 festgestellt wird.

Befindet sich der Sensor 2 in einer Lernphase, was in einem Block II geprüft wird, wird das Verfahren bei einem Block III fortgesetzt, wo eine automatische Ermittlung der zumindest einen Abmessung des Produkts 10 basierend auf der festgestellten Änderung des Parameters erfolgt. Im Kontext der zuvor beschriebenen Figuren 14.1 bis 15.5 handelt es sich bei der zumindest einen Abmessung des Produkts 10 um die Tiefe des Produkts, die genau den Abstandsänderungen Δy entspricht. Diese Produkttiefe wird im Sensor 2 gespeichert bzw. vom Sensor 2 an das Warenwirtschaftssystem funktechnisch kommuniziert. Das Verfahren wird nach dem Block III wieder bei dem Block I fortgesetzt. Je nach tatsächlicher Implementierung, also ob die Produkttiefe bereits durch eine einmalige Abstandsänderung Δy oder auf Grundlage von mehrfachen Abstandsänderungen Δy ermittelt wird, kann die Lernphase einen einzigen Durchlauf der Sequenz der Blöcke I bis III oder einen mehrfachen Durchlauf der Blöcke I bis III umfassen, bis der Sensor 2 einen automatisch als gültig eingestuften Wert der Tiefe des Produkts 10 ermittelt hat. Sobald ein gültiger Wert für die Tiefe des Produkts 10 vorliegt, wird die Lernphase verlassen.

Wird im Block II festgestellt, dass keine Lernphase vorliegt, wird zu einem Block IV verzweigt. Bei dem Block IV wird die zuvor in der Lernphase ermittelte, also vorab bekannte, Abmessung, also die Tiefe des Produkts 10, für die Warenbestandsüberwachung verwendet, wobei automatisch eine Veränderung der Produktanzahl auf Grundlage der im Block I festgestellten Abstandsänderung Δy ermittelt wird. Dabei kann im einfachsten Fall so vorgegangen werden, dass die festgestellte Abstandsänderung Δy durch die Produkttiefe dividiert wird, um die Veränderung der Produktanzahl zu erhalten. Diese kann im Sensor 2 weiterverarbeitet werden oder an ein Warenwirtschaftssystem gefunkt werden, wo eine weitere Verarbeitung erfolgt.

Die so automatisch ermittelte Veränderung der Produktanzahl wird in einem Block V dahingehend überprüft, ob sie einem Kriterium zur Auslösung eines Alarms entspricht. Es kann sich dabei um unterschiedliche Alarme handeln, sowie dies in der allgemeinen Beschreibung im Zusammenhang mit einem Nachbestückungsalarm und einem Diebstahlalarm erörtert wurde. Wird eines der in diesem Zusammenhang erörterten Kriterium erfüllt, also in dem Block V ein positives Prüfungsergebnis erhalten, wird der jeweilige Alarm in einem Block VI ausgelöst und das Verfahren danach beim Block I fortgesetzt. Wird im Block V ein negatives Prüfungsergebnis erhalten, wird ausgehend von dem Block V das Verfahren direkt beim Block I fortgesetzt.

Auch wenn bei der Erörterung der mit der Figur 16 visualisierten Verfahren eine unendliche Schleife dargestellt wurde, sei an dieser Stelle angeführt, dass es natürlich einen Verfahrensstart und ein Ende des Verfahrens geben kann, wobei sich diese Umstände durch äußere Einflussnahme auf den Sensor ergeben können. So kann beispielsweise ein Start durch das Einsetzten von Batterien verursacht sein. Ebenso kann das Ende durch die Entnahme von Batterien verursacht sein. Auch kann der Verarbeitungsablauf des Sensors 2 durch funktechnische Einflussnahme (Fernsteuerung) beeinflusst werden.

Es wird abschließend noch einmal darauf hingewiesen, dass es sich bei den vorangehend detailliert beschriebenen Figuren nur um Ausführungsbeispiele handelt, welche vom Fachmann in verschiedenster Weise modifiziert werden können, ohne den Bereich der Erfindung zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können.
Es sind die folgenden Ausführungen offenbart:
Ausführung 1. Verfahren zur Bestimmung einer Abmessung eines in einer Produktpräsentationsvorrichtung (1) platzierten Produkts (10), wobei das Verfahren die folgenden Schritte aufweist, nämlich:
   - automatisches Feststellen der Änderung eines für zumindest eine Abmessung des Produkts (10) repräsentativen Parameters, wobei der Parameter mit Hilfe eines elektronischen Sensors (2) erfasst wird und der Sensor (2) in der Produktpräsentationsvorrichtung (1) lokalisiert ist, und
   - automatische Ermittlung von zumindest einer Abmessung des Produkts (10) basierend auf der festgestellten Änderung des Parameters.
Ausführung 2. Verfahren nach Ausführung 1, wobei der Sensor (2)
   - entweder ortvariabel positionierbar ist
   - oder fix verortet ist.
Ausführung 3. Verfahren nach einem der vorangehenden Ausführungen, wobei der Sensor (2) zumindest eine der nachfolgend angeführten Ausbildungen aufweist, nämlich:
   - Time-of-Flight-Sensor bzw. ein Laufzeitsensor,
   - Kamera,
   - 3D-Kamerasystem,
   - Time-of-Flight-Kamera,
   - LIDAR,
   - als druckempfindlichen Sensormatte,
   - als Sensormatte mit einem Array aus lichtempfindlichen Elementen.
Ausführung 4. Verfahren nach einem der vorangehenden Ausführungen, wobei die Ermittlung der Abmessung des Produkts (10) nur dann erfolgt, wenn eine Lernphase ausgelöst wurde.
Ausführung 5. Verfahren nach Ausführung 4, wobei die festgestellte Änderung des repräsentativen Parameters auf zumindest einen Auslöser überprüft wird und beim Feststellen des Vorhandenseins dieses Auslösers die Lernphase ausgelöst wird.
Ausführung 6. Verfahren nach einem der vorangehenden Ausführungen, wobei die Ermittlung der Abmessung des Produkts (10) direkt aus einer einzigen Änderung des Parameters erfolgt.
Ausführung 7. Verfahren nach einem der vorangehenden Ausführungen 1 - 5, die Ermittlung der Abmessung des Produkts (10) aus einer Mehrzahl von Änderungen des Parameters erfolgt.
Ausführung 8. Verfahren nach einem der vorangehenden Ausführungen 1-5, wobei die Ermittlung der zumindest einen Abmessung mit Hilfe von künstlicher Intelligenz erfolgt, welche die Änderungen des repräsentativen Parameter verarbeitet bzw. bewertet.
Ausführung 9. Verfahren nach einem der vorangehenden Ausführungen, wobei
   - die Abmessung des Produkts (10) seine Tiefe gemessen in Richtung der Tiefe der Produktpräsentationsvorrichtung (1) bzw. einer Ablagestruktur ist und wobei
   - die Änderung des Parameters durch eine mit Hilfe des Sensors (2) festgestellte Entfernungsänderung (Δy) in Richtung der Tiefe der Produktpräsentationsvorrichtung (1) bzw. der Tiefe der Ablagestruktur gegeben ist, und wobei
   - die Tiefe des Produkts (10) mit Hilfe der festgestellten Entfernungsänderung (Δy) ermittelt wird.
Ausführung 10. Verfahren nach einem der vorangehenden Ausführungen, wobei als Sensor (2) ein auf Laufzeitmessung eines Sensorsignals basierender Sensor (2) eingesetzt wird, insbesondere mit einer Auflösung im cm Bereich oder sub-cm Bereich.
Ausführung 11. Warenbestandüberwachung-Verfahren zum Überwachen des Warenbestands in einer Produktpräsentationsvorrichtung (1), in der zumindest ein Produkt (10) platzierbar ist,
   - wobei für das Produkt (10) zumindest eine Abmessung, die für die Warenbestandüberwachung repräsentativ ist, insbesondere die Tiefe des Produkts (10), vorab bekannt ist, insbesondere nach dem Verfahren gemäß einem der Ansprüche 1-10 bestimmt wurde,
   wobei das Warenbestandüberwachung-Verfahren die nachfolgend angeführten Verfahrensschritte aufweist, nämlich:
   - automatisches Feststellen der Änderung eines für zumindest eine Abmessung des Produkts (10) repräsentativen Parameters, wobei der Parameter mit Hilfe eines elektronischen Sensors (2) erfasst wird und der Sensor (2) in der Produktpräsentationsvorrichtung (1) lokalisiert ist, und
   - automatisches Ermitteln einer Veränderung der Produktanzahl, wobei die Änderung des repräsentativen Parameters gegenüber der zumindest einen für die Warenbestandüberwachung repräsentativen Abmessung bewertet wird.
Ausführung 12. Warenbestandüberwachung-Verfahren nach Ausführung 11, wobei geprüft wird, ob die automatisch festgestellte Veränderung der Produktanzahl zu einer Unterschreitung eines Schwellwerts der Produktanzahl führt, wobei bei einem positiven Prüfungsergebnis ein Nachbestückungsalarm ausgelöst wird.
Ausführung 13. Warenbestandüberwachung-Verfahren nach einem der Ausführungen 11 bis 12, wobei geprüft wird, ob eine automatisch festgestellte Veränderung der Produktanzahl zu einer Überschreitung eines Schwellwert der Produktanzahl-Veränderung führt, wobei bei positivem Prüfungsergebnis eine Diebstahlalarm ausgelöst wird.
Ausführung 14. Warenbestandüberwachung-Verfahren nach einem der Ausführungen 12 bis 13, wobei bei der Prüfung produktspezifische oder produktgruppenspezifische Schwellwerte zum Einsatz kommen.
Ausführung 15. Warenbestandüberwachung-Verfahren nach einem der Ausführungen 11 - 14, wobei bei einer automatischen Feststellung der Veränderung der Produktanzahl eine zusätzliche Systemkomponente einbezogen wird, insbesondere ein Verrechnungs- bzw. Kassensystem, dem die Veränderung der Produktanzahl elektronisch mitgeteilt wird, oder ein optisches Überwachungssystem, mit dem eine digitale Aufnahme der Produktpräsentationsvorrichtung (1) erstellt wird, bei der die Änderung der Produktanzahl festgestellt wurde.

## Patentansprüche

1. Verfahren zur Bestimmung einer Abmessung eines in einer Produktpräsentationsvorrichtung (1) platzierten Produkts (10), wobei das Verfahren die folgenden Schritte aufweist, nämlich:
- automatisches Feststellen einer Mehrzahl von Änderungen eines für zumindest eine Abmessung des Produkts (10) repräsentativen Parameters, wobei der Parameter mit Hilfe eines elektronischen Sensors (2) erfasst wird und der Sensor (2) in der Produktpräsentationsvorrichtung (1) lokalisiert ist,
- Speichern von Änderungsdaten, welche die jeweils erfasste Parameter-Änderung repräsentieren,
- Auswerten der Änderungsdaten, wobei anhand eines zeitlichen Verhaltens und/oder eines wertmäßigen Verhaltens der Parameter-Änderungen zwischen Parameter-Änderungen unterschieden wird, die nicht zur Bestimmung der zumindest einen Abmessung heranzuziehen sind, und solchen Parameter-Änderungen, die zur Bestimmung der zumindest einen Abmessung heranzuziehen sind,
und
- automatische Ermittlung von zumindest einer Abmessung des Produkts (10) basierend auf den zur Bestimmung der zumindest einen Abmessung heranzuziehenden Parameter-Änderungen.

2. Verfahren nach Anspruch 1, wobei zur Ermittlung der Abmessung des Produkts (10) ein vorprogrammierter Algorithmus zur Anwendung kommt, wobei
jene Messwerte, die höchstwahrscheinlich nicht einer Abmessung des Produkts entsprechen, weil sie beim Hineinstellen oder Herausnehmen des Produkts erfasst wurden, aussortiert werden.

3. Verfahren nach Anspruch 1 oder 2, wobei zur Ermittlung der Abmessung des Produkts (10) ein vorprogrammierter Algorithmus zur Anwendung kommt, wobei
Messwerte, die außerhalb eines bestimmten Bereichs, insbesondere außerhalb einer erwarteten Größenordnung, liegen, aussortiert werden.

4. Verfahren nach einem der Ansprüche 1 bis 3, wobei zur Ermittlung der Abmessung des Produkts (10) ein vorprogrammierter Algorithmus zur Anwendung kommt, wobei
Werte in Gruppen aus Messwerten ähnlicher Größe zusammengefasst werden.

5. Verfahren nach einem der Ansprüche 1 bis 4, wobei zur Ermittlung der Abmessung des Produkts (10) ein vorprogrammierter Algorithmus zur Anwendung kommt, wobei der Algorithmus den folgenden Schritt beinhaltet:
- Aussortieren jener Messwerte, die nur kürzer als eine bestimmte Zeitschwelle innerhalb eines bestimmten Bereichs lagen.

6. Verfahren nach Anspruch 5, wobei der Algorithmus den folgenden Schritt beinhaltet:
- Einteilen der übrigen Werte in Kategorien, wobei jede Kategorie einen repräsentativen Wert, insbesondere den Mittelwert oder den Median der Werte innerhalb der Kategorie, aufweist.

7. Verfahren nach Anspruch 6, wobei der Algorithmus den folgenden Schritt beinhaltet:
- Bestimmen
+ der Kategorie mit dem geringsten repräsentativen Wert oder
+ von zwei Kategorien, deren repräsentative Werte am nächsten beisammen liegen.

8. Verfahren nach Anspruch 7, wobei der Algorithmus den folgenden Schritt beinhaltet:
- Festlegen der zu bestimmenden Abmessung
+ auf Basis des repräsentativen Werts der Kategorie mit dem geringsten Wert oder
+ auf Basis der Differenz der repräsentativen Werte der zwei Kategorien mit den am nächsten beisammen liegenden repräsentativen Werten.

9. Verfahren nach einem der vorangehenden Ansprüche, wobei der Sensor (2) zumindest eine der nachfolgend angeführten Ausbildungen aufweist, nämlich:
- eine Kamera,
- ein 3D-Kamerasystem,
- eine Time-of-Flight-Kamera,
- eine druckempfindliche Sensormatte,
- eine Sensormatte mit einem Array aus lichtempfindlichen Elementen.

10. Verfahren nach einem der vorangehenden Ansprüche, wobei die Ermittlung der Abmessung des Produkts (10) nur dann erfolgt, wenn eine Lernphase ausgelöst wurde.

11. Verfahren nach Anspruch 10, wobei die festgestellten Änderungen des repräsentativen Parameters auf zumindest einen Auslöser überprüft werden und beim Feststellen des Vorhandenseins dieses Auslösers die Lernphase ausgelöst wird.

12. Verfahren nach einem der vorangehenden Ansprüche, wobei die Ermittlung der zumindest einen Abmessung mit Hilfe von künstlicher Intelligenz erfolgt, welche die Änderungen des repräsentativen Parameters verarbeitet und/oder bewertet.

13. Verfahren nach Anspruch 12, wobei die künstliche Intelligenz dazu ausgelegt, insbesondere trainiert, ist, zwischen Parameteränderungen, die auf Handbewegungen im Regal schließen lassen, und jenen Parameteränderungen, die zur Bestimmung der zumindest einen Abmessung verwendbar sind, zu unterscheiden.

14. Verfahren nach Anspruch 12 oder 13, wobei
- die künstliche Intelligenz zum Empfangen eines externen Auslösers ausgebildet ist, um die zu bestimmende Abmessung zu erlernen, oder wobei
- die künstliche Intelligenz dahingehend trainiert ist, zu erkennen, dass sich eine Produktabmessung systematisch verändert, insbesondere weil andere Produkte oder Produkte mit anderen Verpackungsabmessungen in das Regal geschlichtet werden, wodurch ein interner Auslöser für das Einlernen der neuen Abmessung gegeben ist, oder wobei
- ein vorprogrammierter Algorithmus vorgesehen ist, der die erfassten Parameter und/oder deren Veränderung verarbeitet und auf Basis dieser Verarbeitung die Lernphase auslöst oder auch wieder stoppt und auch die zumindest eine Abmessung des Produkts (10) ermittelt.

15. Warenbestandüberwachung-Verfahren zum Überwachen des Warenbestands in einer Produktpräsentationsvorrichtung (1), in der zumindest ein Produkt (10) platzierbar ist,
- wobei für das Produkt (10) zumindest eine Abmessung, die für die Warenbestandüberwachung repräsentativ ist, insbesondere die Tiefe des Produkts (10), vorab nach dem Verfahren gemäß einem der Ansprüche 1-14 bestimmt wurde,
wobei das Warenbestandüberwachung-Verfahren die nachfolgend angeführten Verfahrensschritte aufweist, nämlich:
- automatisches Feststellen der Änderung eines für zumindest eine Abmessung des Produkts (10) repräsentativen Parameters, wobei der Parameter mit Hilfe eines elektronischen Sensors (2) erfasst wird und der Sensor (2) in der Produktpräsentationsvorrichtung (1) lokalisiert ist, und
- automatisches Ermitteln einer Veränderung der Produktanzahl, wobei die Änderung des repräsentativen Parameters gegenüber der zumindest einen für die Warenbestandüberwachung repräsentativen Abmessung bewertet wird.
